(19) Europäisches Patentamt
European Patent Office
Office européen des brevets

(11) **EP 4 169 659 A1**

(12) **EUROPEAN PATENT APPLICATION**
published in accordance with Art. 153(4) EPC

(43) Date of publication:
26.04.2023 Bulletin 2023/17

(21) Application number: 21846372.7

(22) Date of filing: 07.07.2021

(51) International Patent Classification (IPC):
*B23K 31/00* (2006.01)    *B23K 9/032* (2006.01)
*B23K 9/04* (2006.01)    *B33Y 10/00* (2015.01)
*B33Y 30/00* (2015.01)    *B33Y 50/00* (2015.01)

(52) Cooperative Patent Classification (CPC):
**B23K 9/032; B23K 9/04; B23K 31/00; B33Y 10/00;**
**B33Y 30/00; B33Y 50/00**

(86) International application number:
**PCT/JP2021/025680**

(87) International publication number:
**WO 2022/019120 (27.01.2022 Gazette 2022/04)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: 20.07.2020 JP 2020123859

(71) Applicant: **KABUSHIKI KAISHA KOBE SEIKO SHO**
**(KOBE STEEL, LTD.)**
**Hyogo 651-8585 (JP)**

(72) Inventor: **TAMURA Eiichi**
**Nishi-ku, Kobe-shi, Hyogo 651-2271 (JP)**

(74) Representative: **Müller-Boré & Partner**
**Patentanwälte PartG mbB**
**Friedenheimer Brücke 21**
**80639 München (DE)**

(54) **DEFECT OCCURRENCE PREDICTION METHOD, AND DEFECT OCCURRENCE PREDICTION DEVICE**

(57)    In the present invention, a modeling plan assistance method uses a mathematical model to associate: input information, which includes various items, namely the material of a modeled object, welding conditions for welding beads, and a welding track; and output information, which includes defect information regarding the modeled object in a case where additive manufacturing has been performed under the conditions in the input information. This mathematical model is used to create a database, and the defect information regarding the modeled object is found by searching the database, and the defect information is then presented. Each item of the input information includes a plurality of input subitems that are mutually different. The output information includes a plurality of individual defect information items which correspond respectively to the input subitems. When the mathematical model is generated, the respective input subitems of the input information are associated with the individual defect information items via the mathematical model.

FIG. 5

**Description**

TECHNICAL FIELD

The present invention relates to a defect occurrence prediction method and a defect occurrence prediction device when a built object is manufactured by weld beads.

BACKGROUND ART

In recent years, there is a growing need for manufacturing a component by additive manufacturing using a 3D printer. Researches and developments have been made toward practical applications of building using a metal material. A 3D printer for additive manufacturing of a metal material produces a built object having a desired shape by melting and solidifying a metal powder or a metal wire by use of a heat source such as a laser or an arc, and depositing the weld metal (weld beads).

However, in the additive manufacturing using the metal material, material properties such as metal structure and hardness tend to change according to manufacturing conditions. The properties of the metal material forming the built object may significantly vary from expected properties. Therefore, in an existing welding technique, the manufacturing conditions are adjusted based on empirical knowledge, trial and error, etc. such that the desired shape and properties can be obtained by predicting properties of the built object when the built object is manufactured under specified manufacturing conditions.

Further, in order to embody utilization of information from the above-mentioned experience and trial and error on a computer, for example, Patent Literature 1 discloses a case in which machine learning is utilized in a process of preparing a test cross-sectional image of a weldment and a test weldment, and determining suitability of weldment specifications such as a strength, a ductility, a hardness, a toughness, and a grain structure based on the test cross- sectional image of the weldment and the test weldment. In addition, Patent Literature 2 discloses a technique for predicting a quality of a built object based on profile characteristics such as a welding current, a welding voltage, and a filler metal feed speed.

CITATION LIST

PATENT LITERATURE

Patent Literature 1: JP2019-5809A
Patent Literature 2: JP2019-162666A

SUMMARY OF INVENTION

TECHNICAL PROBLEM

However, it is considered difficult to predict, based on material viewpoints, the properties of the built object manufactured by additive manufacturing because an additive manufacturing process is more complicated than a simple welding process. In addition, in a manufacturing method based on additive manufacturing, a degree of freedom in manufacturing conditions is extremely high, and there are various combinations of properties of a built object. Property prediction requires an enormous amount of arithmetic process.

In particular, regarding finding of a defect in a deposited structure, there is a case in which it is difficult to apply contact-type internal inspection such as ultrasonic flaw detection because a shape of a built object manufactured by additive manufacturing is complicated. In addition, it is difficult to apply an X-ray flaw detection test to a large-sized built object. An additively-manufactured object has a problem that it is difficult to conduct inspections, including finding of a defect, after building in this manner. Therefore, construction of a method for easily predicting a defect without using a measurement method such as ultrasonic flaw detection or X-ray flaw detection is needed.

Accordingly, an object of the present invention is to provide a defect occurrence prediction method and a defect occurrence prediction device capable of efficiently predicting occurrence of a defect in a built object with little effort and assisting creation of a more appropriate building plan for the built object.

SOLUTION TO PROBLEM

The present invention includes the following configurations.

(1) A defect occurrence prediction method for predicting occurrence of a defect when a built object is manufactured by depositing, in a desired shape, weld beads by melting and solidifying a filler metal fed from a welding head, the method including:

a step of generating a mathematical model that relates input information to output information, the input information including items of a material of the built object, a welding condition, and a welding track, and the output information including defect information of the built object when additive manufacturing is performed under conditions of the items of the input information;
a step of creating a database indicating a correspondence between the input information and the output information by using the mathematical model;
a step of inputting the items of the material of the built object, the welding condition and the welding track into the database, and searching the database to obtain the defect information of the built object; and
a step of presenting the obtained defect information of the built object, wherein
each item of the input information includes a plurality of input subitems that are mutually different,
the output information includes a plurality of pieces of individual defect information corresponding to the input subitems, and
in the step of generating the mathematical model, the input subitems of the input information are respectively related to the individual defect information by the mathematical model.

(2) A defect occurrence prediction method for predicting occurrence of a defect when a built object is manufactured by additive manufacturing, in a desired shape, weld beads formed by melting and solidifying a filler metal fed from a welding head, the method including:

a step of respectively generating a first mathematical model and a second mathematical model, the first mathematical model relating input information to intermediate output information, the input information including items of a material of the built object, a welding condition, and a welding track, the intermediate output information including information regarding a temperature history of the built object when additive manufacturing is performed under conditions of the items of the input information, a feature amount of a shape of a molten pool when each weld bead is formed, and a bead height or bead width of each weld bead, and the second mathematical model relating the intermediate output information to output information including defect information of the built object;
a step of creating a database indicating a correspondence between the input information and the output information by using the first mathematical model and the second mathematical model;
a step of inputting the items of the material of the built object, the welding condition and the welding track into the database, and searching the database to obtain the defect information of the built object; and
a step of presenting the obtained defect information of the built object, wherein
each item of the input information includes a plurality of input subitems that are mutually different,
the intermediate output information includes individual intermediate values corresponding to the input subitems,
the output information includes a plurality of pieces of individual defect information corresponding to the individual intermediate values, and
in the step of generating the first mathematical model and the second mathematical model, the input subitems are respectively related to the individual intermediate values by the first mathematical model, and the individual intermediate values are respectively related to the individual defect information by the second mathematical model.

(3) A defect occurrence prediction device for predicting occurrence of a defect when a built object is manufactured by depositing, in a desired shape, weld beads formed by melting and solidifying a filler metal fed from a welding head, the device including:

a mathematical model generation unit configured to generate a mathematical model that relates input information to output information, the input information including items of a material of the built object, a welding condition, and a welding track, the output information including defect information of the built object when additive manufacturing is performed under conditions of the items of the input information;
a database creation unit configured to create a database indicating a correspondence between the input information and the output information by using the mathematical model;

a search unit configured to search the database based on the items of the material of the built object, the welding condition, and the welding track input into the database to obtain the defect information of the built object; and
an output unit configured to present the obtained defect information of the built object, wherein
each item of the input information includes a plurality of input subitems that are mutually different,
the output information includes a plurality of pieces of individual defect information corresponding to the input subitems, and
in the step of generating the mathematical model, the input subitems of the input information are respectively related to the individual defect information by the mathematical model.

(4) A defect occurrence prediction device for predicting occurrence of a defect when a built object is manufactured by depositing, in a desired shape, weld beads formed by melting and solidifying a filler metal fed from a welding head, the device including:

a mathematical model generation unit configured to respectively generate a first mathematical model and a second mathematical model, the first mathematical model relating input information to intermediate output information, the input information including items of a material of the built object, a welding condition, and a welding track, the intermediate output information including information regarding a temperature history of the built object when additive manufacturing is performed under conditions of the items of the input information, a feature amount of a shape of a molten pool when each weld bead is formed, and a bead height or bead width of each weld bead, the second mathematical model relating the intermediate output information to output information including defect information of the built object;
a database creation unit configured to create a database indicating a correspondence between the input information and the output information by using the first mathematical model and the second mathematical model;
a search unit configured to search the database based on the items of the material of the built object, the welding condition, and the welding track input into the database to obtain the defect information of the built object; and
an output unit configured to present the obtained defect information of the built object, wherein
each item of the input information includes a plurality of input subitems that are mutually different,
the intermediate output information includes individual intermediate values corresponding to the input subitems,
the output information includes a plurality of pieces of individual defect information corresponding to the individual intermediate values, and
in the step of generating the first mathematical model and the second mathematical model, the input subitems are respectively related to the individual intermediate values by the first mathematical model, and the individual intermediate values are respectively related to the individual defect information by the second mathematical model.

ADVANTAGEOUS EFFECTS OF INVENTION

According to the present invention, a defect can be easily predicted without using a complicated measurement method, and a more appropriate building plan for a built object can be created.

BRIEF DESCRIPTION OF DRAWINGS

Fig. 1 is an overall configuration diagram of a building system for manufacturing a built object;
Fig. 2 is a schematic block diagram of a robot control device;
Fig. 3 is a schematic block diagram of a building control device;
Fig. 4 is a diagram illustrating a procedure for creating a building program for additive manufacturing;
Fig. 5 is a diagram illustrating procedures for constructing a database;
Fig. 6 is a flowchart showing procedures for constructing the database;
Fig. 7 is a flowchart showing procedures for creating an initial database to be used in a first procedure;
(A) of Fig. 8 is a diagram illustrating a state in which input information and output information are related by using a mathematical model, and (B) of Fig. 8 is a diagram illustrating a database in which the input information and the output information are associated with each other;
Fig. 9 is a diagram illustrating a relation between input information including a plurality of items and output information using a mathematical model;
Fig. 10 is a diagram illustrating a process of dividing a shape of a built object to be manufactured into a plurality of element shapes and determining a welding track of each element shape;

Fig. 11 is a flowchart showing procedures for creating a building plan when the shape of the built object is decomposed into the element shapes;

Fig. 12 is a diagram illustrating relations between input information, intermediate output information, and output information using mathematical models;

Fig. 13 is a graph showing a temperature history at a specific position of a weld bead to be formed during building;

Fig. 14 are graphs showing a difference in a cooling property when a bead is formed with different heat inputs, (A) is a graph showing a temperature change property in a case of a relatively high heat input, and (B) is a graph showing a temperature change property in a case of a relatively low heat input;

Fig. 15 is a diagram illustrating a molten pool to be formed at a tip of a filler metal;

Fig. 16 is a cross-sectional view showing an example of a defect occurring in a deposited structure of beads deposited in one layer and two rows;

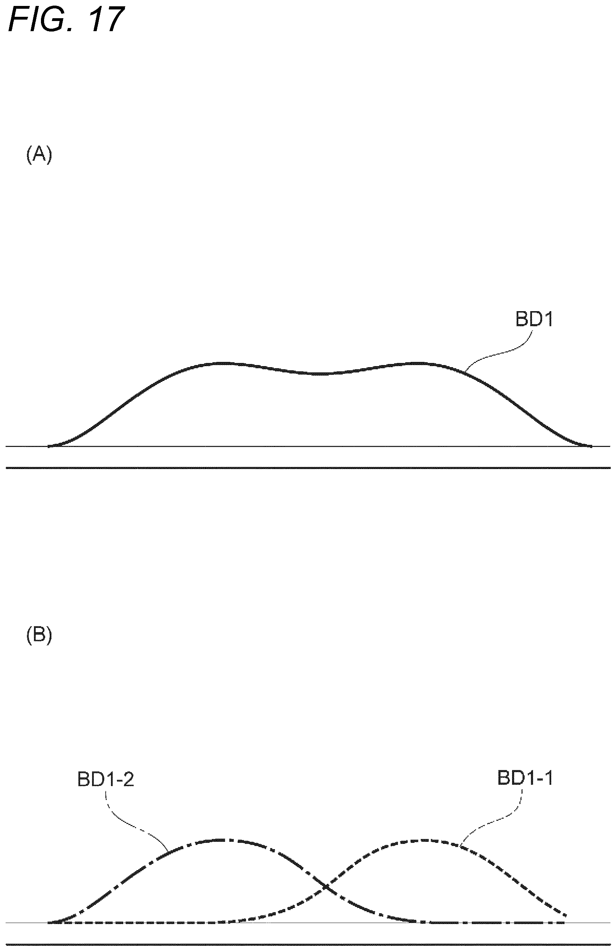

(A) of Fig. 17 is a cross-sectional view of a simulation result of weld beads deposited in one layer and two rows using a model shape function, and (B) of Fig. 17 is a cross-sectional view showing a shape of each bead in (A) of Fig. 17;

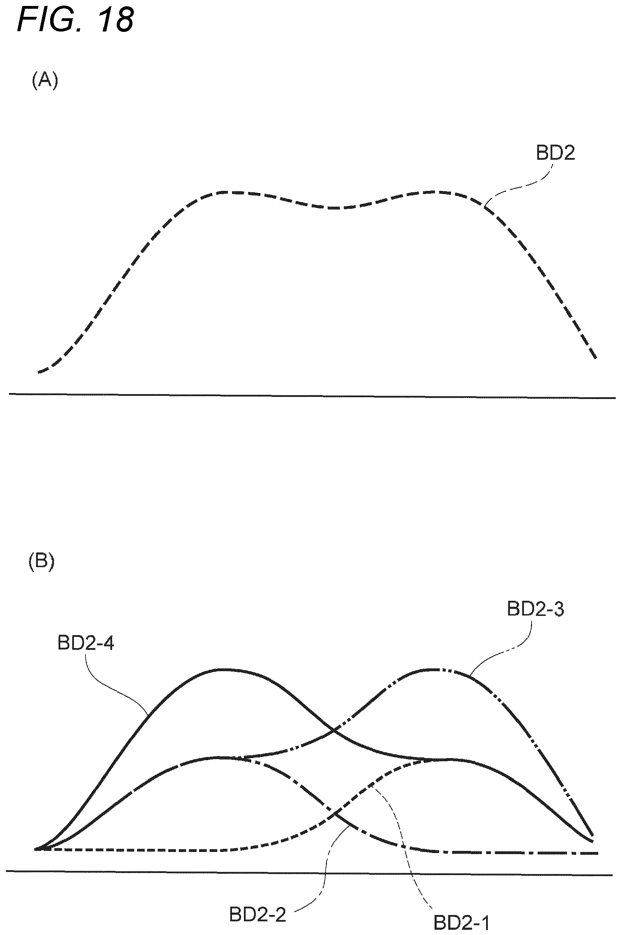

(A) of Fig. 18 is a cross-sectional view of a simulation result of weld beads deposited in two layers and two rows using a model shape function, and (B) of Fig. 18 is a cross-sectional view showing a shape of each bead in each layer in (A) of Fig. 18; and

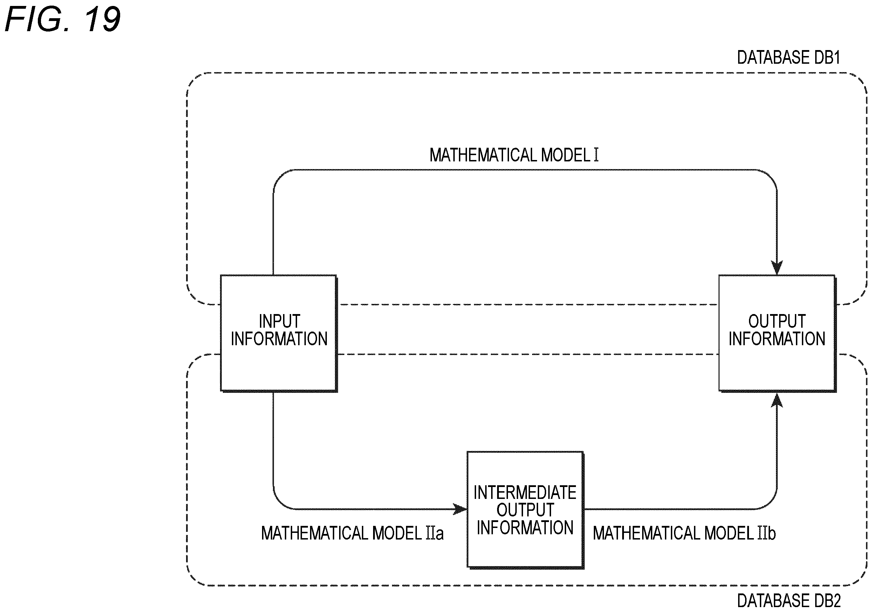

Fig. 19 is a diagram illustrating a state in which a plurality of databases in which input information and output information are related are selectively used.

DESCRIPTION OF EMBODIMENTS

Embodiments of the present invention will be described in detail below by referring to the drawings.

Here, although a case in which weld beads each formed by melting and solidifying a filler metal fed from a welding head are additively manufactured into a desired shape by a building device is described as an example, configurations of a building method and a building device are not limited thereto. For example, other building methods such as a powder sintering and additive manufacturing method may be used.

<Configuration of Building System>

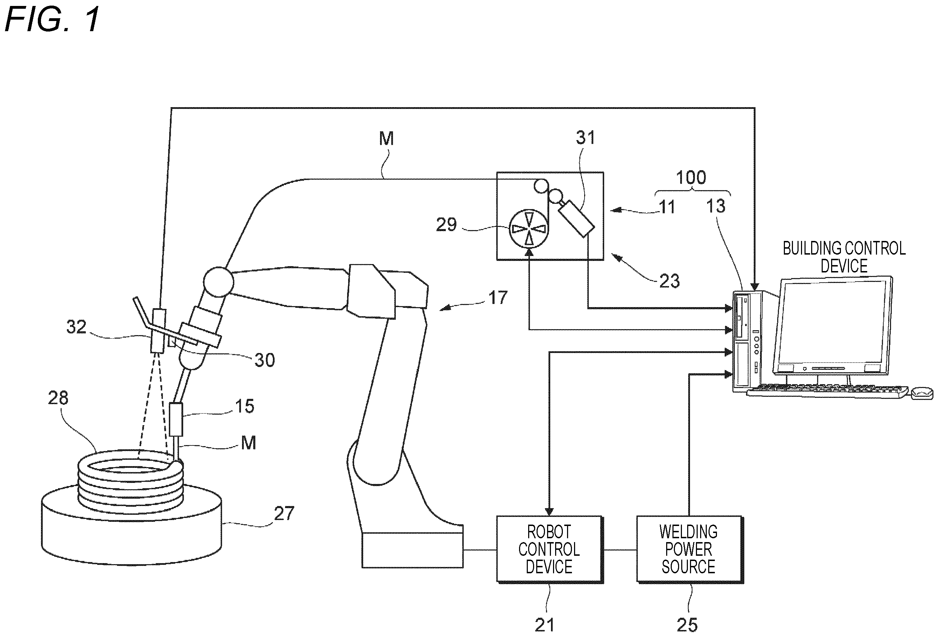

Fig. 1 is an overall configuration diagram of a building system for manufacturing a built object. A building system 100 according to this configuration includes a building device 11 and a building control device 13 that controls the building device 11.

The building device 11 includes a welding robot 17 provided with a welding head having a welding torch 15 on a tip shaft, a robot control device 21 that drives the welding robot 17, a filler metal feeding unit 23 that feeds a filler metal (welding wire) M to the welding torch 15, and a welding power source 25 that supplies a welding current.

(Building Device)

The welding robot 17 is a multi-joint robot, and a continuously fed filler metal M is supported at a tip of the welding torch 15 attached to a tip shaft of a robot arm. A position and a posture of the welding torch 15 can be set three-dimensionally desirably within a range of the degree of freedom of the robot arm according to a command from the robot control device 21.

A shape sensor 32 and a temperature sensor 30 that move integrally with the welding torch 15 are provided on the tip shaft of the welding robot 17.

The shape sensor 32 is a non-contact-type sensor that measures a shape of a weld bead 28 to be formed and, if necessary, a shape around a bead forming position. Measurement by the shape sensor 32 may be performed at the same time when a weld bead is formed, or may be performed at different timings before and after the bead is formed. As the shape sensor 32, a laser sensor that detects a three-dimensional shape based on a position of a reflected light of an irradiated laser light or a time from an irradiation timing to a time at which the reflected light is detected can be used. A detection method of the shape sensor 32 is not limited to laser, and the shape sensor 32 may be a sensor using another detection method.

The temperature sensor 30 is a contact-type sensor such as a radiation thermometer or thermography, and detects a temperature (temperature distribution) at any position of a built object.

The welding torch 15 is a gas metal arc welding torch that has a shield nozzle (not shown) and is supplied with a shield gas from the shield nozzle. An arc welding method may be either a consumable electrode type such as shielded metal arc welding or carbon dioxide gas arc welding, or a non-consumable electrode type such as TIG welding or plasma arc welding, and is appropriately selected depending on an additively-manufactured object to be produced.

For example, in the case of the consumable electrode type, a contact tip is disposed inside the shield nozzle, and the filler metal M to which a melting current is to be supplied is held on the contact tip. The welding torch 15 generates an arc from a tip of the filler metal M in a shield gas atmosphere while holding the filler metal M.

The filler metal feeding unit 23 includes a reel 29 around which the filler metal M is wound, and a wire feed sensor 31 that measures a feed amount of the filler metal M fed from the reel 29 to a delivery mechanism and the welding torch 15. The filler metal M is fed from the filler metal feeding unit 23 to a delivery mechanism (not shown) attached to the robot arm or the like, and fed to the welding torch 15 while being fed forward and backward by the delivery mechanism as necessary.

Any commercially available welding wire can be used as the filler metal M. For example, welding wires provided as MAG welding and MIG welding solid wires (JIS Z 3312) for mild steel, high tensile steel and cryogenic steel, and arc welding flux-cored wires (JIS Z 3313) for mild steel, high tensile steel and cryogenic steel can be used. In addition, filler metals M such as aluminum, aluminum alloys, nickel, nickel-based alloys, etc. can be used depending on desired properties.

Then, when the continuously fed filler metal M is melted and solidified by an arc as described above, the weld bead 28 which is a melt-solidified body of the filler metal M is formed on a base plate 27. The base plate 27 is a metal plate such as a steel plate, but is not limited to such a plate-shaped object, and may be in other shapes such as a block shape, a rod shape, or a columnar shape.

(Robot Control Device)

The robot control device 21 drives the welding robot 17 to move the welding torch 15 and melt the continuously fed filler metal M by a welding current and a welding voltage from the welding power source 25.

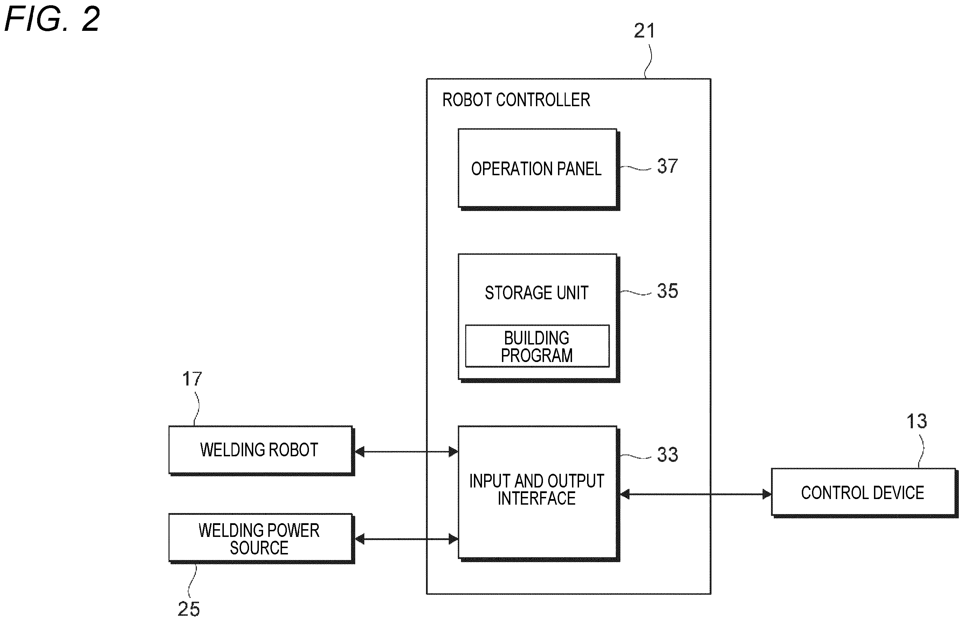

Fig. 2 is a schematic block diagram of the robot control device 21.

The robot control device 21 is a computer device including an input and output interface 33, a storage unit 35 and an operation panel 37.

The input and output interface 33 is connected to the welding robot 17, the welding power source 25 and the building control device 13. The storage unit 35 stores various types of information including a drive program, which will be described later. The storage unit 35 includes a storage exemplified by a memory such as a ROM and a RAM, a drive device such as a hard disk and a solid state drive (SSD), a storage medium such as a CD, a DVD, and various memory cards, and various information can be input and output. The operation panel 37 may be an information input unit such as an input operation panel, or may be an input terminal for teaching the welding robot 17 (a teaching pendant).

A building program corresponding to a built object to be produced is transmitted from the building control device 13 to the robot control device 21. The building program includes a large number of instruction codes, and is created based on an appropriate algorithm according to various conditions such as shape data (CAD data, etc.), a material, and a heat input of the built object.

The robot control device 21 executes the building program stored in the storage unit 35 to drive the welding robot 17, the filler metal feeding unit 23, the welding power source 25, etc., and forms the weld bead 28 according to the building program. That is, the robot control device 21 drives the welding robot 19 to move the welding torch 15 along a track (welding track) of the welding torch 15 set in the building program, and drives the filler metal feeding unit 23 and the welding power source 25 according to a set welding condition to melt and solidify the filler metal M at the tip of the welding torch 15 by arc. Accordingly, the weld bead 28 is formed on the base plate 27. The weld beads 28 are adjacent to each other to form a weld bead layer, and a next weld bead layer is deposited on this weld bead layer, which is repeated to form a built object having a desired three-dimensional shape.

The building control device 13 also functions as a defect occurrence prediction device that provides defect information in a case of generating a building program. It should be noted that the building control device 13 may be disposed apart from the building device 11 and connected to the building device 11 from a remote location via a network, a communication unit, a storage medium, etc. The building program may be created by another device other than the building control device 13 and may be transmitted by communication.

(Generation of Building Program)

Next, a configuration of the building control device 13 and a specific procedure until the building control device 13 generates the building program will be described.

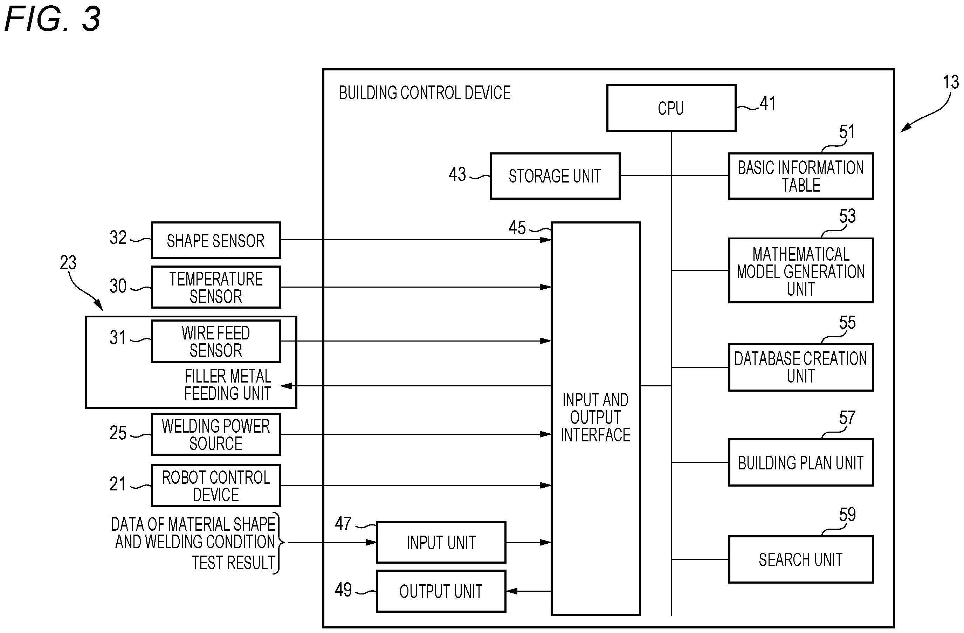

Fig. 3 is a schematic block diagram of the building control device 13.

The building control device 13 is a computer device similar to the robot control device 21 and includes a CPU 41, a storage unit 43, an input and output interface 45, an input unit 47, and an output unit 49.

The storage unit 43 includes a ROM, which is a nonvolatile storage area, and a RAM, which is a volatile storage area. The input and output interface 45 is connected to the shape sensor 32, the temperature sensor 30, the filler metal feeding unit 23 including the wire feed sensor 31, the welding power source 25, the robot control device 21, the input unit 47, and the output unit 49, which are described above.

The input unit 47 is an input device such as a keyboard and mouse, and the output unit 49 includes a display device such as a monitor or an output terminal to which an output signal is transmitted.

In addition, the building control device 13 further includes a basic information table 51, a mathematical model generation unit 53, a database creation unit 55, a building plan unit 57, and a search unit 59, each of which will be described in detail below. Each of the components described above is operated according to a command from the CPU 41, and exhibits a function thereof.

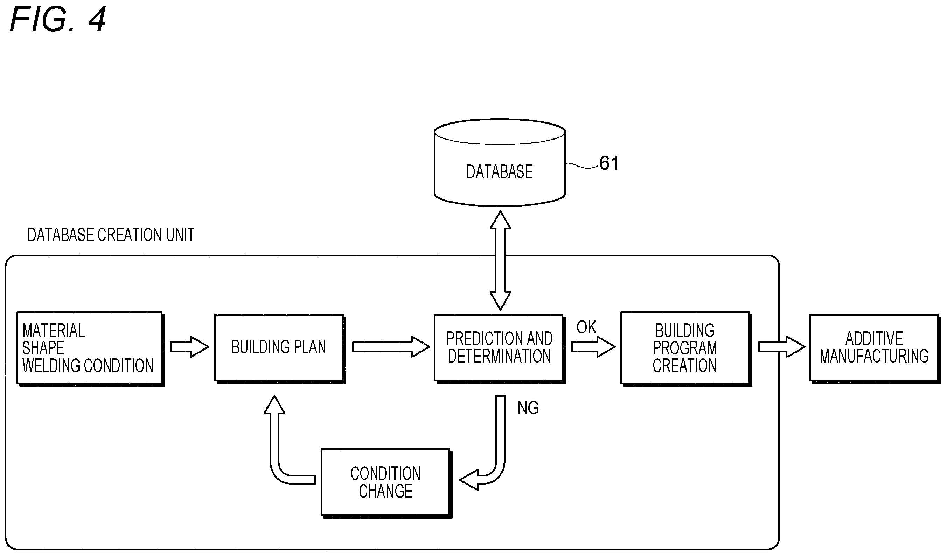

Fig. 4 is a diagram illustrating a procedure for creating a building program for additive manufacturing.

First, an operator inputs, by the input unit 47 of the building control device 13 shown in Fig. 3, data or the like of a material, a shape, and a welding condition of a built object to be manufactured. The building control device 13 creates a building plan according to the input data such that the built object can obtain desired properties. For example, a model is generated based on shape data, the generated model is divided into layers for each predetermined height of a weld bead, and various conditions such as a material, a bead width, and an order of forming a bead (welding track) of the weld bead are determined so as to fill each obtained layer with the weld bead. There are various methods for determining these welding tracks and the like, and the determination method is not limited.

Next, a defect that occurs in the built object when the built object is produced according to the created building plan is predicted with reference to a database 61 prepared in advance, which indicates correspondences between various manufacturing conditions and defect information of the built object manufactured under the conditions. The "defect" as used herein broadly means internal properties of a built object, which includes defect information.

When it is predicted that a defect may occur in the predicted built object, the building plan is created again by adjusting the various manufacturing conditions described above. Then, when the built object according to the created building plan does not include a defect, that is, when the properties including the defect satisfy the desired properties, a building program is created according to the building plan. The building program thus created is sent to the robot control device 21 shown in Fig. 1. The robot control device 21 executes the sent building program to additively manufacture the built object.

In a building plan assistance method and device according to the present invention, the database 61 used for predicting and judging whether the built object can obtain the desired properties by the created building program is efficiently constructed with little effort. Accordingly, accurate and quick determination of the building plan can be performed, and thus assistance can be provided for smoothly creating a more appropriate building plan.

<First Database Configuration Example>

Next, a method for constructing the database 61 described above will be described.

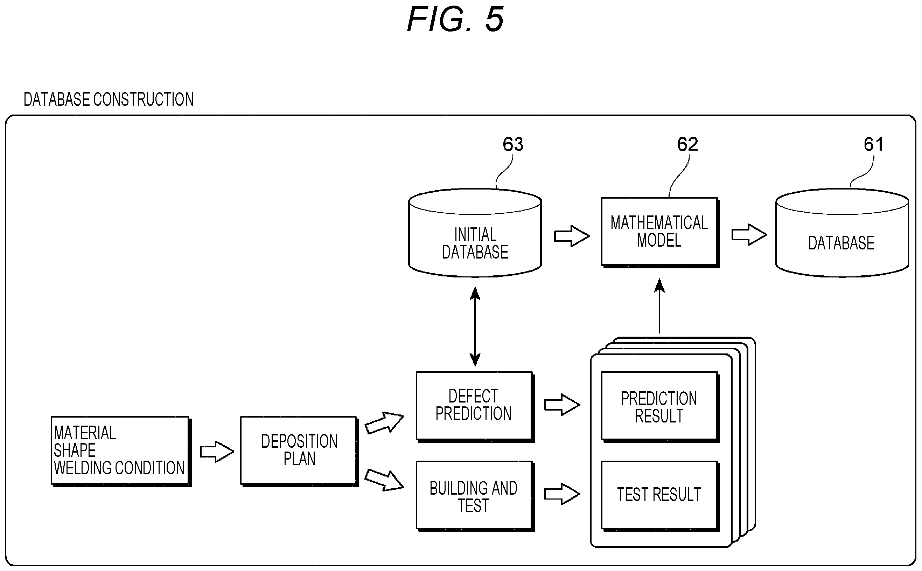

Fig. 5 is a diagram illustrating procedures for constructing the database 61. Here, input information and output information are related by using a mathematical model, the input information includes items of a material of the built object, a welding condition of the weld bead, and a partial welding track, and the output information includes defect information of the built object in which additive manufacturing is performed under conditions of the input information. The relation process is repeatedly performed by machine learning, and the database 61 referenced in the prediction and judgment shown in Fig. 4 is created based on the obtained mathematical model.

Specifically, the building control device 13 creates a building plan according to the input data such as the material, the shape, and the welding condition of the built object. Property values of the built object when the built object is produced according to this building plan are obtained by the following first procedure and second procedure.

In the first procedure, the building control device 13 predicts, with reference to an initial database 63 in which relations between the building plan and the property values are registered in advance, occurrence of a defect in the built object to be additively-manufactured according to the created building plan.

In the second procedure, the building control device 13 drives the robot control device 21 in accordance with the created building plan, and causes the building device 11 to additively manufacture the built object. A test sample is cut out from the additively-manufactured built object, and a mechanical strength, a metal structure, etc. are actually measured by testing (observation).

A mathematical model 62 is generated by comparing a prediction result and a test result of the properties of the built object according to the same building plan obtained in this way such that a difference between the two results is reduced, and the database 61 is created using this mathematical model 62. The initial database 63 and the database 61 are created by the database creation unit 55 shown in Fig. 3, but may be created by a device other than the building control device 13.

Here, a flow of a series of processes including generating the mathematical model 62 by machine-learning the prediction result of the properties according to the initial database 63 in the first procedure and the test result in the second procedure, and creating the database 61 using this mathematical model 62 will be described.

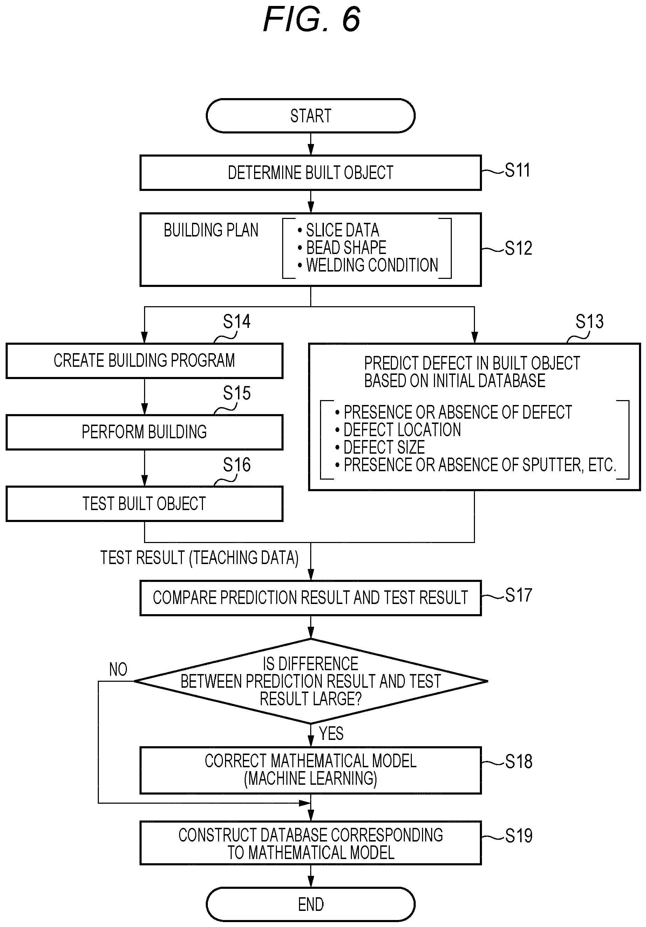

Fig. 6 is a flowchart showing procedures for constructing the database 61.

First, a built object to be manufactured is determined and shape data (shape data by 3D-CAD) is created (S11). A building plan is created based on the shape data of this built object (S12). The building plan includes a plurality of slice data obtained by dividing a model of the built object into layers by defining a predetermined depositing direction axis, a shape of a weld bead in each slice data, a welding condition for forming the weld bead, and the like.

Next, a defect in the built object is predicted according to the first procedure based on the created building plan (S13). The predicted defect includes, for example, presence or absence of a defect, a defect location, a defect size, and presence or absence of a sputter.

The defect in the built object is predicted by using the initial database 63. The initial database 63 is created based on the basic information table 51 (Fig. 3) which is based on experience and knowledge obtained from past building and indicates correspondences between various manufacturing conditions and test results of the built object manufactured under the conditions.

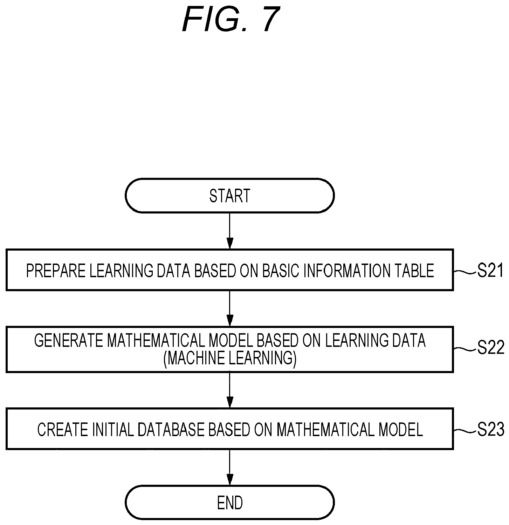

Fig. 7 is a flowchart showing procedures for creating the initial database 63 to be used in the first procedure.

First, parameter information (for example, a pass forming the weld bead, the number of passes, an order of forming the weld bead (welding track), and a cross-sectional shape of the weld bead) to be used in the database is extracted from the basic information table 51 prepared in advance, and is prepared as learning data (S21).

Next, the prepared learning data and property values of the built object corresponding to the learning data are related by an initial mathematical model (S22). That is, by repeatedly performing machine learning on a plurality of pieces of learning data and property values of the built object corresponding the learning data, an initial mathematical model expressing relations between the learning data and the property values of the built object are generated. The "mathematical model" as used herein means a model capable of formulating a quantitative behavior of properties of a built object and simulating nature of the properties of the built object by calculation. That is, the mathematical model is a calculation model created based on a group of experimental data collected in experiments and related by a predetermined algorithm, and this calculation model may be optimized to match well with the experimental data by assuming a predetermined function, or may be created by providing input information and output information by machine learning. Examples of a specific algorithm include a support vector machine, a neural network, and a random forest.

Then, the property values of the built object corresponding to the plurality of pieces of learning data are predicted by using the generated initial mathematical model, and these predicted values are made to correspond to the learning data and are registered as table components of the initial database 63 (S23). In this way, the initial database 63 is created.

Meanwhile, in the second procedure (S 14 to S16 in Fig. 6), a built object is produced based on the created building plan. That is, the building plan unit 57 (Fig. 3) creates a building program according to the building plan (S14), and the building device 11 shown in Fig. 1 is driven by executing the building program to build a built object (S15). Then, a test sample is cut out from the obtained built object, and various properties of the test sample are tested (S16).

Then, the prediction result of the properties of the built object obtained in the first procedure is compared with the test result obtained in the second procedure (S17). When the difference between the prediction result and the test result is large, the mathematical model 62 shown in Fig. 5 (corresponding to the initial mathematical model used in creating the initial database 63) is corrected such that the difference between the two results is reduced (S18). That is, the mathematical model 62 is caused to machine-learn such that the prediction result approaches the test result by using the test result for the input information as teaching data. It should be noted that when the difference between the prediction result and the test result is small, the mathematical model 62 is not corrected, but machine learning may be performed to improve accuracy of the mathematical model 62. In this way, the mathematical model 62 becomes a learned model that has machine-learned a relation between the input information and the output information.

Then, by using the mathematical model 62 obtained by causing the initial mathematical model to further machine-learn, property values (output information) of the built object corresponding to a plurality of any conditions (input information) are predicted, and the set conditions and the predicted property values are associated with each other to form table components of the database 61. In this way, the initial database 63 is corrected by using the mathematical model 62 to construct the database 61 in which a prediction result and a test result for a specific condition accurately match (S19).

Thus, a part where a test result does not exist can be complemented by predicting output information from a plurality of input information by using the mathematical model 62, thereby easily increasing an amount of information in the database 61 and improving accuracy of prediction.

Next, a specific method of constructing the database 61 by using the mathematical model 62 will be described in more detail.

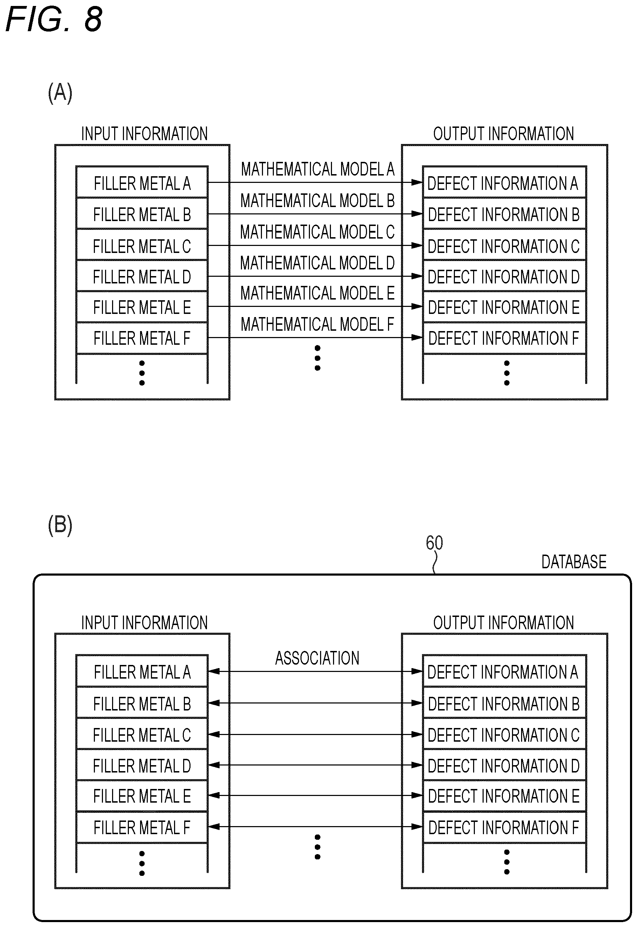

(A) of Fig. 8 is a diagram illustrating a state in which input information and output information are related by using a mathematical model, and (B) of Fig. 8 is a diagram illustrating a database in which the input information and the output information are associated with each other.

Here, a filler metal, which is a material of the built object, will be described as an example of the input information. As shown in (A) of Fig. 8, various filler metals A, B, C ... can be selected as the filler metal. When a built object is produced by using each of the filler metals A, B, C, ..., defects that may occur in the built object to be obtained include defect information A for the filler metal A, defect information B for the filler metal B, defect information C for the filler metal C, ....

In that case, each type of filler metal is related to defect information by using a separate mathematical model such as the defect information A of the built object for the filler metal A using a mathematical model A, the defect information B of the built object for the filler metal B using a mathematical model B, and the defect information C of the built object for the filler metal C using a mathematical model C.

Therefore, as shown in (B) of Fig. 8, in the created database 61, the filler metals are respectively related to defect information such as the filler metal A and the defect information A being associated, the filler metal B and the defect information B being associated, and the filler metal C and the defect information C being associated. Accordingly, since the mathematical models are individually machine-learned for each type of filler metal to determine the defect information, the defect information corresponding to the properties of the filler metal can be accurately and finely set. Therefore, defect prediction accuracy can be improved.

The type of filler metal may be specified by a trade name such as MG-51T and MG-S63B (solid wire manufactured by Kobe Steel, Ltd.), or may be distinguished by a component composition (for example, carbon content) of the filler metal.

In the above-mentioned example, each defect information is related to each type of filler metal, but actual input information includes more various kinds of items.

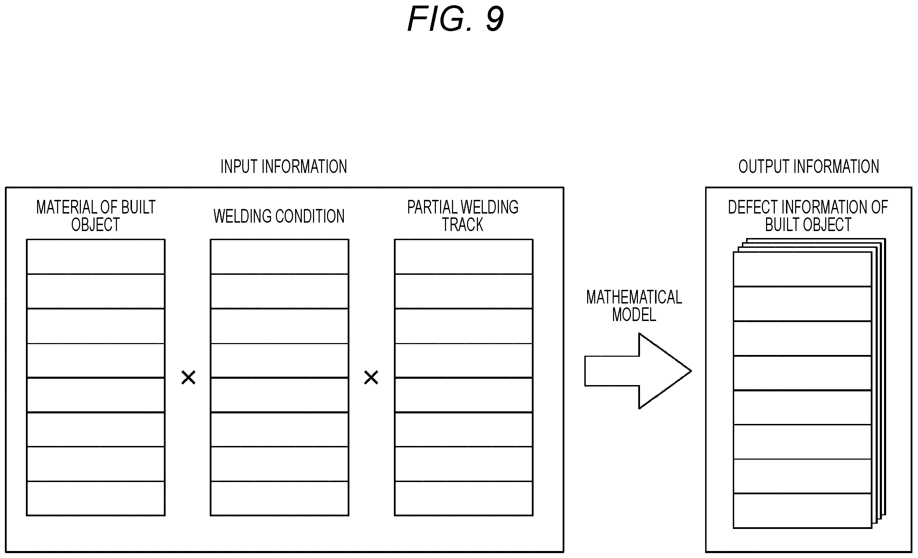

Fig. 9 is a diagram illustrating a relation between input information including a plurality of items and output information using a mathematical model.

The input information at least includes a material of a built object, a welding condition, and a partial welding track. In addition to the filler metal described above, examples of a material of a weldment include members such as the base plate 27 (Fig. 1) on which the weld bead is formed, and a structural member (not shown) that is joined to the weld bead and becomes a component of the built object.

Examples of the welding condition include at least one of a welding current, a welding voltage, a travel speed, a width of a pitch between welding tracks, an interpass time, a target position of the welding head, a welding position of the welding head, and a speed of feeding the filler metal when the weld bead is formed, or a combination thereof. Here, the target position of the welding head is a torch tip position for arranging a torch tip at a welding location, and the welding position of the welding head is an inclination angle between a vertical axis and a torch axis and a circumferential angle in a torch inclination direction around the vertical axis. In addition, the width of a pitch between welding tracks is a distance between adjacent welding tracks, and the interpass time shows a time moving from a welding pass of one welding track to a welding pass of a next welding track in a plurality of welding tracks.

The above-mentioned interpass time affects a metal structure of the weld bead to be formed.

During formation of the weld bead, when a filler metal made of a molten mild steel is quenched, the filler metal becomes a mixed structure mainly containing bainite. In addition, when the filler metal made of the molten mild steel solidifies naturally, the filler metal becomes a structure containing coarse ferrite, pearlite, and bainite. In a case of depositing weld beads, the structure becomes a structure in which when the weld beads are heated above a transformation point of ferrite by depositing weld beads of layers subsequent to the next layer, pearlite and bainite transform into ferrite, and coarse ferrite is refined.

In a case of adjusting the interpass time, for example, depositing the weld beads of the next layer while controlling an interlayer time and a heat input, and similarly depositing weld beads of the layers subsequent to the next layer, so that an interpass temperature falls within a range of 200°C to 550°C, the weld beads are heated above the transformation point of ferrite. In that case, a homogenized structure made of a fine ferrite phase with an average grain size of 10 $\mu$m or less is obtained. Such a weld bead has a high hardness (for example, about 130 to 180 Hv in Vickers hardness), a good mechanical strength, and a substantially uniform hardness with little variation.

Meanwhile, when the interpass temperature is less than 200°C in a case of depositing the weld beads of the next layer, even when the weld beads are heated by depositing the weld beads of the layers subsequent to the next layer, the transformation point of ferrite is not exceeded, and a homogenized structure made of a fine ferrite phase cannot be obtained. For example, at an initial stage of building, the interpass temperature in the case of depositing the weld beads of the next layer is less than 200°C due to heat removal by the base plate 27. In that case, the weld beads at the initial stage of building become a mixed structure mainly containing bainite. In addition, when the interpass temperature exceeds 550°C, the weld beads are heated by depositing the weld beads of the next layer, and the weld beads are flattened and drip, making it impossible to deposit the weld beads in a predetermined shape. Further, since weld beads at a later stage of building (the uppermost layer of the built object) are not deposited with weld beads of a next layer and are not heated again, the molten filler metal remains in a naturally solidified state, that is, a structure containing coarse ferrite, pearlite and bainite.

Thus, the metal structure of the weld bead to be formed during the interpass time changes, and accordingly a defect in the built object also changes. The above is about the effect of the interpass time on the defect in the built object, but it has been found that other parameters similarly affect the properties of the built object.

The partial welding track is a welding track for an element shape obtained by cutting out a part of a shape of the built object, and means a welding track for, when a complex shape is decomposed into simple shapes (element shapes), building the simple shapes (this point will be discussed later). Information regarding each welding track includes information regarding a pass forming the weld bead, the number of passes, an order of forming the weld bead, and a cross-sectional shape of the weld bead.

Here, a material of a building material, the welding condition, and the partial welding track described above are each referred to as an "item", and the filler metals A, B, C, ... , the welding current, the welding voltage, the travel speed, ... , the element shape, the pass, the number of passes, ... for items are each referred to as an "input sub item ".

By dividing each item of the input information into a plurality of input subitems, a range that can be input can be restricted. That is, by preventing a content other than the input subitems from being set as input data, for example, it is possible not to deviate from a recommended range of the welding robot 17 or the like of the building device 11, a recommended condition for using the filler metal, etc. Accordingly, it is possible to prevent a trouble due to a failure in a device or a material in advance, and to avoid presentation of an inappropriate condition.

As shown in Fig. 9, the input information includes the plurality of items such as the material of the built object, the welding condition, and the partial welding track, and each item includes a plurality of input subitems that are mutually different.

In addition, when contents of the items are represented by numerical values, regarding input data for each item, input subitems that divide a range of the input data into a plurality of sections may be defined, and a representative value corresponding to each input subitem may be defined as the input data. The representative value for each input subitem may be a value that represents the input subitem, such as a value of a median value, or an upper limit value, or a lower limit value within the input subitem.

In addition, a range of the input data does not need to be the same as the input information, which is performance data. The database creation unit 55 inputs the input data for each input subitem determined in this way to a mathematical model created by the mathematical model generation unit 53 to obtain output data for each input subitem.

In addition, output data of the output information are output values of mathematical models corresponding to the input data. Here, each input data for each input subitem can be input data using, as a representative value, a median value of a data section defined as an input subitem, for example. Then, the database creation unit 55 creates a database by accumulating and saving, for each input subitem, a correspondence between input data and output data obtained by inputting the input data for each input subitem into a mathematical model. That is, the database creation unit 55 creates a database in which the output data for each input subitem obtained by dividing a range of each item of the input data into a plurality of sections is accumulated.

Thus, the input subitems of each item are related to the defect information of the built object by the mathematical model. Although it is possible to cause a plurality of mathematical models to learn in all combinations as described above, it is preferable to aggregate the plurality of mathematical models into approximately one mathematical model based on a specific welding condition, a welding track pattern, etc., and tune for each parameter based on the mathematical model. The "tune" as used here includes transfer learning and the like, in which one (learned model) learned in one area serves and is caused to efficiently learn in another area. Accordingly, it is possible to reduce an amount of calculation by reducing the learning data.

Next, an element shape in a case of determining a partial welding track and a welding track for each element shape will be described together with a specific example of a built object.

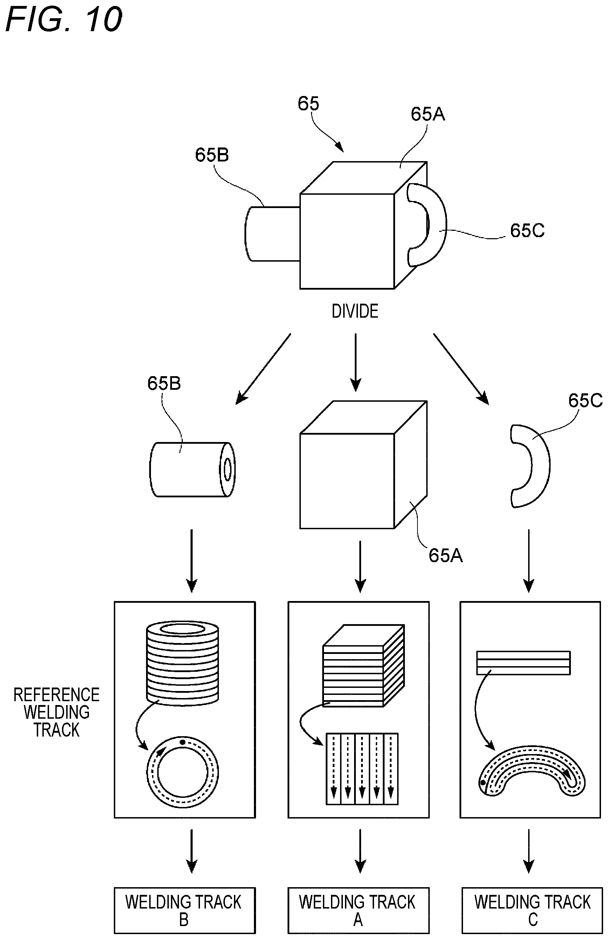

Fig. 10 is a diagram illustrating a process of dividing a shape of a built object to be produced into a plurality of element shapes and determining a welding track of each element shape.

Here, a built object including a main body 65A, a first protrusion 65B connected to one surface of the main body 65A, and a second protrusion 65C connected to the other surface of the main body 65A is exemplified as the built object 65. When the built object 65 is divided into simple element shapes, the cylindrical first protrusion 65B, the cubic main body 65A, and the U-shaped second protrusion 65C are obtained. The division into the element shapes may be performed manually or by pattern matching with pre-registered simple shapes or the like.

For each of the divided element shapes, a welding track indicating an order of forming the weld bead is determined. That is, the welding track is determined for each divided element shape. The welding track for each element shape may be determined by designing each time the main body is divided into element shapes, but since the element shape is a simple shape, a plurality of types of welding tracks (reference welding tracks) each having a simple shape may be registered in advance in an element database, and a welding track having a shape corresponding to the element shape may be determined with reference to this element database.

For example, in a case of a cylindrical element shape, the cylindrical body is divided into a plurality of layers, and for each of the divided layers, a pass (torch track) for forming the weld bead become a determined reference welding track. By applying this reference welding track to the first protrusion 65B, a welding track B, which is a building procedure in a case of building the first protrusion 65B with the weld bead, can be easily determined.

For the main body 65A and the second protrusion 65C, similarly, reference welding tracks each having a similar shape can be determined by searching from the element database, and a welding track A of the main body 65A and a welding track C of the second protrusion 65C can be easily determined from the determined reference welding tracks.

Thus, even for a built object having a complicated shape, by dividing the built object into element shapes, the built object can be regarded as an aggregate of simple shapes, and thus a building plan can be simplified. In addition, since occurrence of a defect can be predicted for each element shape, it also contributes to specifying at which position (around which position) the defect will occur in the entire built object.

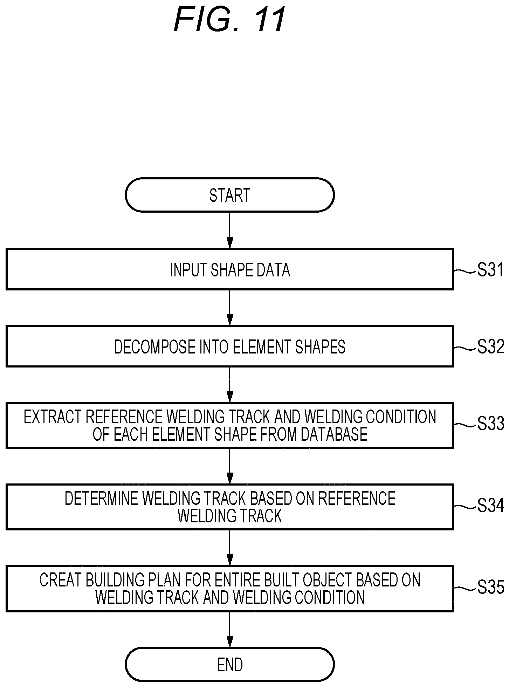

Fig. 11 is a flowchart showing procedures for creating a building plan when the shape of the built object is decomposed into the element shapes.

When the shape data of the built object to be produced is input to the building plan unit 57 of the building control device 13 shown in Fig. 3 (S31), the building plan unit 57 decomposes a model created from the shape data into a plurality of element shapes (S32). Then, various pieces of information such as a reference welding track and a welding condition corresponding to each decomposed element shape are separately extracted by searching an element database (not shown) prepared in advance (S33). The element database used here is information including reference welding tracks and welding conditions that are set corresponding to element shapes, and these pieces of information are registered in the element database in advance.

Each welding track is determined by applying the extracted reference welding track to the corresponding element shape (S34), and a building plan for the entire built object is created by combining the welding track and the welding condition (S35).

The created building plan is the building plan of S12 shown in Fig. 7. Therefore, regarding the building plan obtained by decomposing the shape of the built object into the element shapes and determining the welding track and the welding condition for each element shape, by generating a mathematical model and constructing the database 61 in the same manner as described above, the building plan shown in Fig. 4 is assisted.

It should be noted that regarding the welding condition, information regarding the welding condition can be easily collected from drive signals and the like of the building device 11, the wire feed sensor 31, the shape sensor 32, and the welding robot 17. Those values can also be used to feedback control the shape of the model as necessary.

<Second Database Configuration Example>

Next, a case in which intermediate output information is provided in addition to the input information and the output information of the database 61 described above will be described.

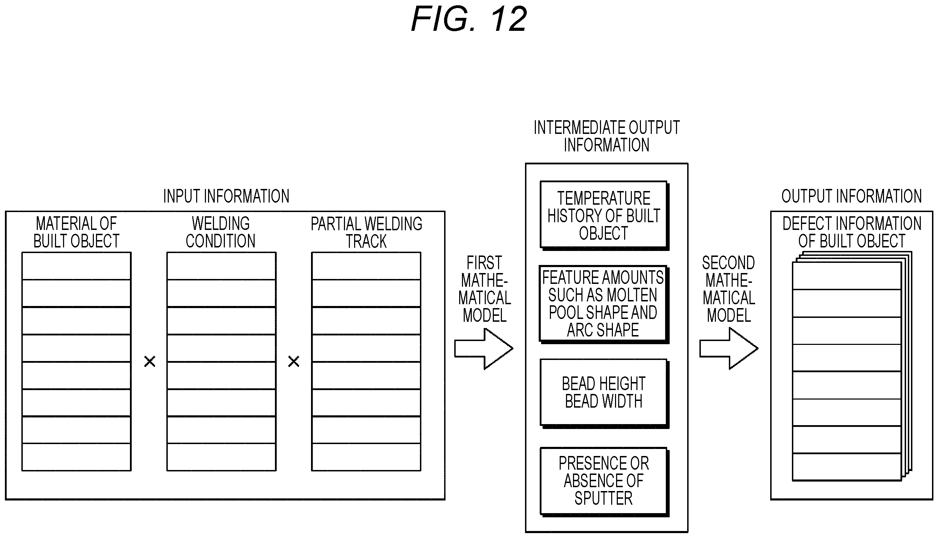

Fig. 12 is a diagram illustrating relations between input information, intermediate output information, and output information using mathematical models.

Items of the input information including a material of a built object, a welding condition, and a partial welding track each include a plurality of input subitems. The intermediate output information is related to each combination of the input subitems by a separate first mathematical model. In addition, each input subitem of the intermediate output information is related to each input subitem of the output information by a second mathematical model.

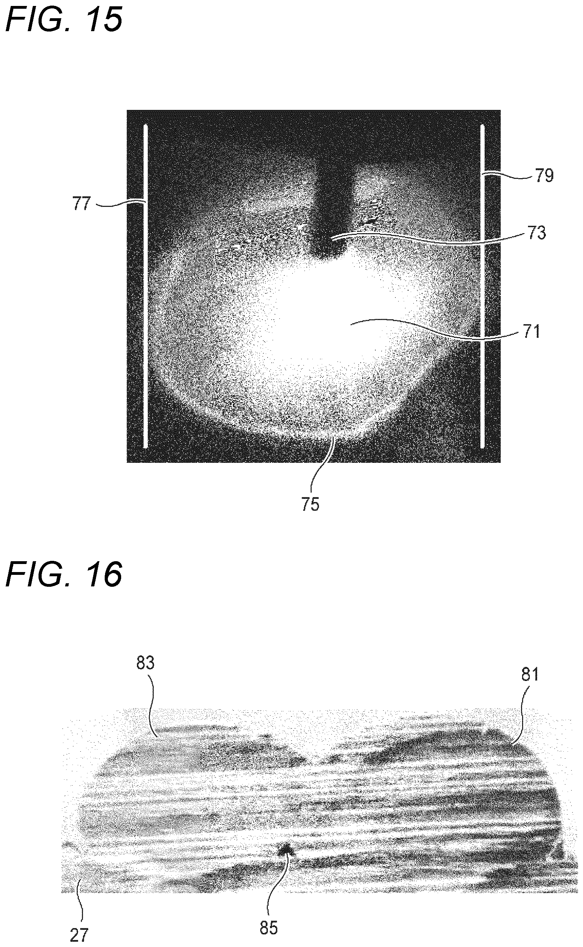

Here, the intermediate output information includes information regarding a temperature history of the built object, a feature amount of a shape of a molten pool when a weld bead is formed, and a bead height or bead width of the weld bead, and may include a property amount of an arc shape, presence or absence of a sputter, etc. The molten pool and the like will be described later with reference to Fig. 15. In addition, a characteristic of the bead will be described later with reference to Figs. 16 to 18.

First, the temperature history of the built object will be described. The temperature history greatly affects an internal state (for example, a material) including a defect of a deposited structure of the built object. Therefore, analyzing the temperature history and estimating the internal state of the built object is useful for predicting a possibility of occurrence of a defect and a degree thereof (for example, a defect size).

When the material of the built object such as a filler metal is heated according to the welding condition and melted and solidified along a predetermined welding track, the temperature history of the built object (weld bead) to be formed differs depending on the conditions in the items described above. Therefore, properties such as mechanical strength and metal structure of the built object to be formed also differ depending on the conditions, thereby also affecting a defect that occurs.

In a case of estimating the defect information of the built object, even when it is difficult to directly estimate the defect information of the built object based on each item (each condition) of the input information, if the temperature history, the feature amount of the shape of the molten pool, and the bead height or bead width can be understood for each item, it may be easier to estimate the defect information of the built object. Therefore, in a case of relating the input information to the defect information of the built object which is the output information, a two-step relation is performed including first relating each item of the input information to the intermediate output information, and then relating the intermediate output information to the defect information of the built object (in a broad sense, the internal state of the built object including a defect), which is the output information. Accordingly, compared with the case in which the input information and the output information are directly related, it is possible to relate and estimate with higher precision.

By using the temperature history, the feature amount of the shape of the molten pool, the bead height or bead width as an intermediate output, representative features of building conditions are aggregated, making it easier to correlate each feature with defect information. In addition, the intermediate output information listed here can be easily collected even during building by providing a shape sensor and a temperature sensor.

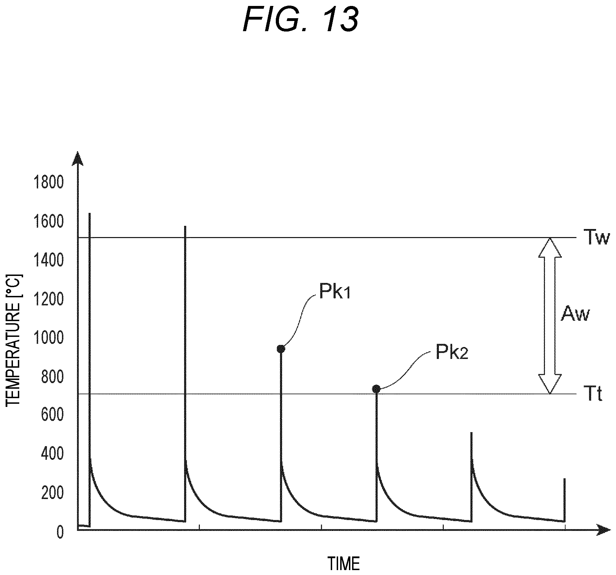

Fig. 13 is a graph showing a temperature history at a specific position of a weld bead to be formed during building. As shown in Fig. 13, repeatedly deposited weld beads themselves are melted and solidified to become a weld bead, then heat is input again by a weld bead deposited on an upper layer, and heating (it may be melting when the heated layer is an adjacent layer) and cooling are repeated. Regarding each peak of the temperature history, since the higher the layer above the weld bead at the specific position, the further away from the specific position, the temperature is decreased.

Assuming that a melting point Tw of the weld bead is 1534°C, which is the melting point of iron (carbon steel), and a transformation point Tt of the weld bead (the A1 transformation point of carbon steel) is 723°C, a material of the weld bead after solidification is substantially determined by the temperature history in a range from the transformation point Tt to the melting point Tw. That is, although heating and cooling are repeated in additive manufacturing, a factor that affects a structure of the built object is the temperature history in a range Aw described above. Therefore, by extracting a feature amount of the temperature history in the range (inspection temperature range) Aw from the transformation point Tt to the melting point Tw, the properties of the built object can be predicted.

For example, among a plurality of peaks shown in Fig. 13, peaks exceeding the melting point Tw and peaks below the transformation point Tt are ignored. Then, among peaks in the inspection temperature range Aw from the transformation point Tt to the melting point Tw, a temperature of the low-temperature-side local maximum point Pk2 that is closest to the transformation point Tt and a temperature of the high-temperature-side local maximum point Pk1 that is second closest to the transformation point Tt are extracted. These temperatures of the high-temperature-side local maximum point Pk1 and the low-temperature-side local maximum point Pk2 are set as the feature amount of the temperature history, that is, the intermediate output information.

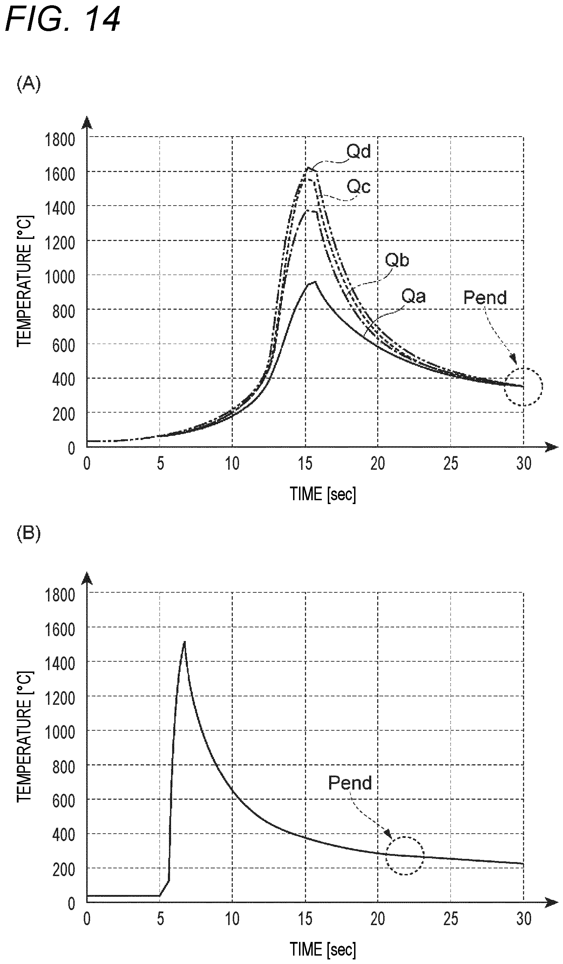

Fig. 14 are graphs showing a difference in a cooling property when a bead is formed with different heat inputs, (A) is a graph showing a temperature change property in a case of a relatively high heat input, and (B) is a graph showing a temperature change property in a case of a relatively low heat input.

As shown in (A) of Fig. 14, even though the heat input is increased in order from Qa to Qb, Qc, and Qd, a time until cooling to about 350°C does not change much, and in this case the time is about 15 seconds (see P end). Meanwhile, as shown in (B) of Fig. 14, when the heat input is relatively low, if a time of being cooled is about 15 seconds, it is cooled down to about 300°C (see P end). That is, the higher the heat input, the slower the cooling rate, and the lower the heat input, the faster the cooling rate. Therefore, the cooling rate depends on the heat input, and when the temperature of the low-temperature-side local maximum point Pk2 is known, a structure of the weld bead can be predicted. Further, by predicting properties of the structure or the like by combining the temperature of the low-temperature-side local maximum point Pk2 and the temperature of the high-temperature-side local maximum point Pk1, prediction accuracy can be improved compared with a case in which prediction is made based on only one of the temperatures.

Thus, when the temperature history, which is a factor determining the material of the weld bead, can be specified based on the feature amount described above, the material of the weld bead formed in the temperature history can be predicted with relatively high accuracy, which can be used to determine a possibility of defect occurrence. Therefore, items of intermediate processing information are set as determinants of the material of the building material, and the input information and the intermediate output information are related by the first mathematical model and the intermediate output information and the output information are related by the second mathematical model. Accordingly, it is possible to expect an effect that the input information and the output information can be related more accurately than when the input information and the output information are directly related.

Regarding this temperature history, temperature data at a predetermined position may be acquired by monitoring the temperature of the built object by the temperature sensor 30 (Fig. 1) during building. The temperature sensor 30 may detect the temperature in cooperation with the shape sensor 32. That is, the shape sensor 32 detects the shape of the built object, and the temperature sensor 30 detects a temperature at a specific position of the built object.

In addition, a temperature simulation calculation may be performed based on the type of filler metal and the welding condition. An example of a basic equation used for temperature simulation will be shown below.

(Equation 1)

$$^{t+\Delta t}[H] = {}^{t}[H] - \Delta t[C][K]\,{}^{t}[T] - \Delta t[C]\,{}^{t}[F] + \Delta t\,{}^{t}[Q] \cdots (1)$$

The basic equation (1) is an equation for heat transfer analysis by a so-called explicit finite element method (FEM). Each parameter in the basic equation (1) is as follows.

H:    enthalpy

C:     reciprocal of node volume
K:     heat conduction matrix
F:     heat flux
Q:     volumetric heat generation

Accordingly, a nonlinear phenomenon such as latent heat release can be calculated with high accuracy by using the enthalpy as an unknown quantity. It should be noted that a heat input during welding is input as a parameter for the volumetric heat generation or the heat flux.

In the above-mentioned basic equation (1), which is a three-dimensional heat conduction equation, the heat input during building (welding) may be applied to a welding region in accordance with the travel speed. In addition, when the weld bead is short, heat input may be applied to the entire one bead.

Next, a case in which the intermediate output information is a feature amount relating to the molten pool or the like will be described.

Fig. 15 is a diagram illustrating a molten pool to be formed at a tip of a filler metal. In Fig. 15, an arc center 71, a filler metal tip 73, a molten pool tip 75, a molten pool left end 77, and a molten pool right end 79 are shown as the feature amount (image feature information). However, the feature amount is not limited thereto, and for example, a width of an arc, a shape of the arc, etc. may be estimated and extracted as the feature amount.

As an example, when there is a protrusion or the like having a complex shape on a part of a built object being welded, or when there is a wall portion of a work nearby, the presence thereof limits movement of a torch, and a generated arc is attracted to the protrusion or the wall portion, resulting in changing an arc direction. As a result, fluctuations in the feature amount may occur, such as an area or a position of the molten pool deviating from a normal range, or a distance between the filler metal tip and the arc center increasing. By machine-learning a tendency of such fluctuations, feature amounts relating to the molten pool and the arc can be predicted (estimated) based on the input information (at least one of the material of the built object, the welding condition, a track plan, etc.).

For example, deviation from a normal range may be observed in the feature amount of the molten pool or the arc. For example, only a part of a molten metal is intensively heated, quickly melts and solidifies, but a temperature of the other portion slowly rises, and the temperature rise causes uneven remelting of the previously solidified part, which may result in insufficient bonding strength. In such a case, if the tendency can be machine-learned, a possibility and degree of defect occurrence, a defect occurrence position, and the like can be predicted (estimated) based on the feature amount of the molten pool.

Next, a case in which the intermediate output information is information regarding characteristics of the weld bead such as the bead height and the bead width will be described.

Fig. 16 is a cross-sectional view showing an example of a defect occurring in a deposited structure of beads deposited in one layer and two rows.

In the deposited structure shown here, a first bead 81 is formed on the base plate 27 and a second bead 83 is formed to overlap a part of the first bead 81.

A defect in a cavity (nest) 85 occurs between the first bead 81 and the second bead 83, and although not shown, adhesion of a slag, a sputter, etc. is also observed around each bead. The slag and the sputter are formed outside the deposited structure, but when the beads are deposited, the slag and the sputter may be sandwiched between the beads and enter an inside of the deposited structure. In that case, properties such as bonding strength, durability, and mechanical strength are affected. Thus, characteristics of adjacent beads are closely related to defects inside the beads, and can be useful information for predicting occurrence of the defects.

Such defects inside the beads cannot be detected only by imaging appearance shapes of the beads with a camera, and must rely on a flaw detection test using ultrasonic waves or X-rays. However, according to the prediction method, by applying, to a model shape function, information obtained from a captured image, it is possible to decompose into the weld beads, which are components, and by understanding the characteristics of each decomposed weld bead, it is possible to estimate occurrence of a defect with high accuracy. Here, the model shape function will be specifically described.

(A) of Fig. 17 is a cross-sectional view of a simulation result of weld beads deposited in one layer and two rows using a model shape function, and (B) of Fig. 17 is a cross-sectional view showing a shape of each weld bead in (A) of Fig. 17.

In (A) of Fig. 17, BD1 is a cross-sectional shape of the weld beads deposited in one layer and two rows as a whole. This cross-sectional shape is obtained by synthesizing a first bead shape BD1-1 and a second bead shape BD1-2 shown in (B) of Fig. 17. That is, the cross-sectional shape of the weld beads as a whole can be decomposed into a first bead and a second bead, and defect information can be estimated individually for each bead.

(A) of Fig. 18 is a cross-sectional view of a simulation result of weld beads deposited in two layers and two rows using a model shape function, and (B) of Fig. 18 is a cross-sectional view showing a shape of each weld bead in (A) of Fig. 18.

In (A) of Fig. 18, BD2 is a cross-sectional shape of the weld beads deposited in two layers and two rows as a whole. This cross-sectional shape is obtained by synthesizing a shape BD2-1 of a first bead and a shape BD2-2 of a second bead in a first layer and a shape BD2-3 of a third bead and a shape BD2-4 of a fourth bead in a second layer shown in (B) of Fig. 18. It should be noted that the third and fourth beads in the second layer each indicate a bead shape that is arranged after the first and second beads in the first layer are formed. That is, the cross-sectional shape of the weld beads as a whole can be decomposed into the first to fourth beads, and defect information can be estimated individually for each bead.

Thus, by applying the model shape function to the information regarding the entire appearance shape of the weld beads obtained from shape detection results of the weld beads, shape information such as the bead height and the bead width of each weld bead in each layer can be specified. By registering in advance the specified shape information in a database, for example, as a parameter of a learning model and correlating the specified shape information with the defect information obtained from the test result, it is possible to predict a defect with higher accuracy, taking into consideration the characteristics of each weld bead.

<Other Database Configuration Examples>

Fig. 19 is a diagram illustrating a state in which a plurality of databases in which input information and output information are related are selectively used.

In the first database configuration example described above, the input information and the output information are related by using a mathematical model I, and a database DB 1 (database 61 described above) is constructed by the mathematical model I.

In addition, in the second database configuration example, the input information and the intermediate output information are related by using a mathematical model IIa and the intermediate output information and the output information are related by using a mathematical model IIb, and a database DB2 (database 61 described above) is constructed by the mathematical model IIa and the mathematical model IIb.

Then, the constructed databases DB 1 and DB2 are compared, and a database whose output information is more accurate with respect to the input information is used as the database 61 shown in Fig. 4. For the comparison of the databases DB 1 and DB2, for example, a set of input information and output information (teaching data) whose correspondence is known is used to determine accuracy of output with respect to input.

Accordingly, by constructing a plurality of databases and selectively using a more accurate database, accuracy of predicting a defect (in a broad sense, properties including a defect) in a built object is improved, and creation of a more appropriate building plan can be assisted.

Thus, the present invention is not limited to the embodiments described above, and the combination of configurations of the embodiments with each other and the modification or application by a person skilled in the art based on the statements in the description and common techniques are also expected in the present invention and are included in the claimed range.

As described above, the present description discloses the following items.

(1) A defect occurrence prediction method for predicting occurrence of a defect when a built object is manufactured by depositing, in a desired shape, weld beads by melting and solidifying a filler metal fed from a welding head, the method including:

a step of generating a mathematical model that relates input information to output information, the input information including items of a material of the built object, a welding condition, and a welding track, and the output information including defect information of the built object when additive manufacturing is performed under conditions of the items of the input information;
a step of creating a database indicating a correspondence between the input information and the output information by using the mathematical model;
a step of inputting the items of the material of the built object, the welding condition and the welding track into the database, and searching the database to obtain the defect information of the built object; and
a step of presenting the obtained defect information of the built object, wherein
each item of the input information includes a plurality of input subitems that are mutually different,
the output information includes a plurality of pieces of individual defect information corresponding to the input subitems, and
in the step of generating the mathematical model, the input subitems of the input information are respectively related to the individual defect information by the mathematical model.

According to the defect occurrence prediction method, by constructing a database regarding defect occurrence, it is possible to predict occurrence of a defect in a built object before additive manufacturing is performed. In addition, for a built object, which is manufactured by additive manufacturing and to which it is difficult to apply contact-type internal inspection such as ultrasonic flaw detection due to a complicated shape thereof, or a built object to which it is difficult to apply an X-ray flaw detection test due to a large size thereof, a defect can be easily predicted.

(2) A defect occurrence prediction method for predicting occurrence of a defect when a built object is manufactured by additive manufacturing, in a desired shape, weld beads formed by melting and solidifying a filler metal fed from a welding head, the method including:

a step of respectively generating a first mathematical model and a second mathematical model, the first mathematical model relating input information to intermediate output information, the input information including items of a material of the built object, a welding condition, and a welding track, the intermediate output information including information regarding a temperature history of the built object when additive manufacturing is performed under conditions of the items of the input information, a feature amount of a shape of a molten pool when each weld bead is formed, and a bead height or bead width of each weld bead, and the second mathematical model relating the intermediate output information to output information including defect information of the built object;

a step of creating a database indicating a correspondence between the input information and the output information by using the first mathematical model and the second mathematical model;

a step of inputting the items of the material of the built object, the welding condition and the welding track into the database, and searching the database to obtain the defect information of the built object; and

a step of presenting the obtained defect information of the built object, wherein

each item of the input information includes a plurality of input subitems that are mutually different,

the intermediate output information includes individual intermediate values corresponding to the input subitems,

the output information includes a plurality of pieces of individual defect information corresponding to the individual intermediate values, and

in the step of generating the first mathematical model and the second mathematical model, the input subitems are respectively related to the individual intermediate values by the first mathematical model, and the individual intermediate values are respectively related to the individual defect information by the second mathematical model.

According to the defect occurrence prediction method, by using the temperature history, the feature amount of the molten pool or the like, the bead height or bead width, etc. as an intermediate output, representative features of building conditions are aggregated, making it easier to correlate with defect information. In addition, the intermediate output information listed here can be easily collected by providing a shape sensor and a temperature sensor during building the built object, and can be implemented by a simple method. For example, it is possible to confirm, based on a predicted temperature history, whether an internal state of the built object is such that a defect is likely to occur or a possibility of defect occurring is higher than a normal possibility of defect occurring. Further, based on the feature amount of the molten pool or the like directly related to welding, it is possible to estimate a possibility of performing welding outside a normal range, for example, and to narrow down presence or absence and degree of defect occurrence. In addition, shape information of the weld bead in each layer of the weld bead is estimated by using a model shape function or the like, and a position, a size, etc. of a defect can be predicted in consideration of a shape, size, degree of crush, irregularity in outer shape, and degree of structural instability of the weld bead. Further, the above-mentioned defect can be predicted in consideration of presence or absence of spatter generation. Thus, by a simple method utilizing a database, it is possible to predict defect occurrence with unprecedented high precision without greatly increasing a learning amount.

In addition, it is also possible to improve the prediction accuracy by combining a plurality of pieces of intermediate output information to predict the defect occurrence. In addition, it is also possible to further improve a reliability of prediction by increasing types of the intermediate output information.

(3)The defect occurrence prediction method according to (1) or (2), wherein information regarding the material in the input information includes information regarding a type of the filler metal.

According to the defect occurrence prediction method, since a viscosity of the weld bead during melting varies depending on the type of filler metal and the cross-sectional shape of the weld bead tends to vary accordingly, defect occurrence prediction suitable for each filler metal can be performed by creating a mathematical model for each type of filler metal. This also contributes to efficient formulation of a welding condition and a track plan suitable for each filler metal.

(4) The defect occurrence prediction method according to any one of (1) to (3), wherein information regarding the welding condition in the input information includes information regarding at least one of a welding current, a welding voltage, a travel speed, a width of a pitch between adjacent welding tracks, an interpass time of moving from a specific welding track to another welding track among a plurality of the welding tracks, a target position of the welding head, a welding position of the welding head, and a speed of feeding the filler metal when each weld bead is formed, or a combination thereof.

According to the defect occurrence prediction method, focusing on various items of the welding condition, for example, by limiting to some dominant items or by cutting out in various patterns, it is possible to output intermediate output information and defect occurrence information corresponding to a selected item. That is, various variations can be obtained in predicting the defect occurrence. This also facilitates an increase in the number of data. In addition, since the items are indexes that can be monitored during building, data can be easily collected.

(5) The defect occurrence prediction method according to any one of (1) to (4), wherein information regarding the welding track in the input information includes information regarding at least one of passes forming each weld bead, the number of passes, an order of forming each weld bead, and a cross-sectional shape of each weld bead.

According to the defect occurrence prediction method, an effect same as the above-mentioned (4) can be achieved.

(6) The defect occurrence prediction method according to any one of (1) to (5), wherein the welding track includes a partial welding track corresponding to an element shape obtained by cutting out a part of an entire shape of the built object.

According to the defect occurrence prediction method, by dividing the entire built object into a plurality of element shapes and setting a track plan for each element shape, a complex built object can be represented by a combination of simple element shapes. Accordingly, the intermediate output information corresponding to the input information, and the defect information which is final output information, can be predicted with a reduced amount of calculation. That is, by creating a database in association with a partial track plan, even when a target is a complex built object, if a shape is appropriately decomposed, prediction becomes easy and versatility can be improved.

In addition, by aggregating defect prediction information based on the partial track plan, defect prediction for the entire built object can be performed. This decomposition for each element shape may be performed manually, or may be cut out by pattern matching with pre-registered simple shapes.

For example, each cut-out element shape can be decomposed into layers by defining a predetermined depositing direction axis, and each layer can be divided into predetermined bead units to create a track for forming each weld bead. Thus, since occurrence of a defect can be predicted for each element shape, it is possible to easily specify at which position of the built object a defect will occur. In addition, by creating in advance a partial welding track corresponding to each element shape in various variations, even for a built object having a complicated shape, properties of the built object including a defect can be predicted with high efficiency without requiring complicated processing, and an appropriate building plan can be created.

(7) The defect occurrence prediction method according to any one of (1) to (6), wherein the output information includes information regarding at least one of a defect size, a defect shape, a spatter generation amount, and presence or absence of defect occurrence.

According to the defect occurrence prediction method, it is possible to search a database, that is, to estimate a defect and the like, by using important indexes relating to the quality of a built object as the output information. Therefore, prior to actual building, defect prediction using a database can be performed to obtain defect information that can be important indexes relating to the quality of the built object. That is, it is possible to efficiently predict the quality of the built object by using these important indexes as the output information.

(8) The defect occurrence prediction method according to any one of (1) to (7), wherein the mathematical model is a learned model obtained by machine-learning of a relation between the input information and the output information.

According to the defect occurrence prediction method, a mathematical model can be easily constructed as long as there is data, and accuracy of the model can be improved by expanding the data each time additive manufacturing is performed. By constructing the mathematical model by machine learning, it is possible to complement a part without test data and improve the prediction accuracy. In addition, since data corresponding to input and output can be collected from built objects with basic shapes such as wall building and block building, machine learning data can be easily prepared and a highly feasible configuration is made.

(9) The defect occurrence prediction method according to any one of (1) to (8), wherein an input range of the input information is restricted to a range limited based on a predetermined condition.

According to the defect occurrence prediction method, by setting a limit on an input range so as not to deviate from a recommended range for driving the building device, a recommended condition for using the filler metal, etc., it is possible to avoid inputting a condition that is likely to cause a trouble due to a failure in a device or a material. In addition, for example, by excluding, from a search target, a case that deviates from a recommended range of a welding machine, a recommended condition for using the filler metal, etc., it is also possible to reduce a calculation load of the mathematical model.

(10) A defect occurrence prediction device for predicting occurrence of a defect when a built object is manufactured by depositing, in a desired shape, weld beads formed by melting and solidifying a filler metal fed from a welding head, the device including:

a mathematical model generation unit configured to generate a mathematical model that relates input information to output information, the input information including items of a material of the built object, a welding condition, and a welding track, the output information including defect information of the built object when additive manufacturing is performed under conditions of the items of the input information;

a database creation unit configured to create a database indicating a correspondence between the input information and the output information by using the mathematical model;

a search unit configured to search the database based on the items of the material of the built object, the welding condition, and the welding track input into the database to obtain the defect information of the built object; and

an output unit configured to present the obtained defect information of the built object, wherein

each item of the input information includes a plurality of input subitems that are mutually different,

the output information includes a plurality of pieces of individual defect information corresponding to the input subitems, and

in the step of generating the mathematical model, the input subitems of the input information are respectively related to the individual defect information by the mathematical model.

According to the defect occurrence prediction device, by constructing a database regarding defect occurrence, it is possible to predict occurrence of a defect in a built object before additive manufacturing is performed. In addition, for a built object, which is manufactured by additive manufacturing and to which it is difficult to apply contact-type internal inspection such as ultrasonic flaw detection due to a complicated shape thereof, and a built object to which it is difficult to apply an X-ray flaw detection test due to a large size thereof, a defect can be easily predicted.

(11) A defect occurrence prediction device for predicting occurrence of a defect when a built object is manufactured by depositing, in a desired shape, weld beads formed by melting and solidifying a filler metal fed from a welding head, the device including:

a mathematical model generation unit configured to respectively generate a first mathematical model and a second mathematical model, the first mathematical model relating input information to intermediate output information, the input information including items of a material of the built object, a welding condition, and a welding track, the intermediate output information including information regarding a temperature history of the built object when additive manufacturing is performed under conditions of the items of the input information, a feature amount of a shape of a molten pool when each weld bead is formed, and a bead height or bead width of each weld bead, and the second mathematical model relating the intermediate output information to output information including defect information of the built object;

a database creation unit configured to create a database indicating a correspondence between the input information and the output information by using the first mathematical model and the second mathematical model;

a search unit configured to search the database based on the items of the material of the built object, the welding condition, and the welding track input into the database to obtain the defect information of the built object; and

an output unit configured to present the obtained defect information of the built object, wherein

each item of the input information includes a plurality of input subitems that are mutually different,

the intermediate output information includes individual intermediate values corresponding to the input subitems,

the output information includes a plurality of pieces of individual defect information corresponding to the individual intermediate values, and

in the step of generating the first mathematical model and the second mathematical model, the input subitems are respectively related to the individual intermediate values by the first mathematical model, and the individual intermediate values are respectively related to the individual defect information by the second mathematical model.

According to the defect occurrence prediction device, by using the temperature history, the feature amount of the molten pool or the like, the bead height or bead, etc. as an intermediate output, representative features of building conditions are aggregated, making it easier to correlate with defect information. In addition, the intermediate output information listed here can be easily collected by providing a shape sensor and a temperature sensor during building the built object, and thus can be implemented by a simple method. For example, it is possible to confirm, based on a predicted temperature history, whether an internal state of the built object is such that a defect is likely to occur or a possibility of defect occurring is higher than a normal possibility of defect occurring. Further, based on the feature amount of the molten pool or the like directly related to welding, it is possible to estimate a possibility of performing welding outside a normal range, for example, and to narrow down presence or absence and degree of defect occurrence. In addition, shape information of the weld bead in each layer of the weld bead is estimated by using a model shape function or the like, and a position, a size, etc. of a defect can be predicted in consideration of a shape, size, degree of crush, irregularity in outer shape, and degree of structural instability of the weld bead. Further, the above-mentioned defect can be predicted in consideration of presence or absence of spatter generation. Thus, by a simple method utilizing a database, it is possible to predict defect occurrence with unprecedented high precision without greatly increasing a learning amount.

In addition, it is also possible to improve the prediction accuracy by combining a plurality of pieces of intermediate output information to predict the defect occurrence. In addition, it is also possible to further improve a reliability of prediction by increasing types of the intermediate output information.

The present application is based on a Japanese patent application (Japanese Patent Application No. 2020-123859) filed on July 20, 2020, contents of which are incorporated by reference in the present application.

REFERENCE SIGNS LIST

| | |
|---|---|
| 11: | building device |
| 13: | building control device |
| 15: | welding torch |
| 17: | welding robot |
| 21: | robot control device |
| 23: | filler metal feeding unit |
| 25: | welding power source |
| 27: | base plate |
| 29: | reel |
| 30: | temperature sensor |
| 31: | wire feed sensor |
| 32: | shape sensor |
| 33: | input and output interface |
| 35: | storage unit |
| 37: | operation panel |
| 39: | weld bead layer |
| 41: | CPU |
| 43: | storage unit |
| 45: | input and output interface |
| 47: | input unit |
| 49: | output unit |
| 51: | basic information table |
| 53: | mathematical model generation unit |
| 55: | database creation unit |
| 57: | building plan unit |
| 59: | search unit |
| 61: | database |
| 63: | initial database |
| 65: | built object |
| 65A: | main body (element shape) |
| 65B: | first protrusion (element shape) |
| 65C: | second protrusion (element shape) |

**Claims**

1. A defect occurrence prediction method for predicting occurrence of a defect when a built object is manufactured by depositing, in a desired shape, weld beads by melting and solidifying a filler metal fed from a welding head, the method comprising:

a step of generating a mathematical model that relates input information to output information, the input information including items of a material of the built object, a welding condition, and a welding track, and the output information including defect information of the built object when additive manufacturing is performed under conditions of the items of the input information;
a step of creating a database indicating a correspondence between the input information and the output information by using the mathematical model;

a step of inputting the items of the material of the built object, the welding condition and the welding track into the database, and searching the database to obtain the defect information of the built object; and
a step of presenting the obtained defect information of the built object, wherein
each item of the input information includes a plurality of input subitems that are mutually different,
the output information includes a plurality of pieces of individual defect information corresponding to the input subitems, and
in the step of generating the mathematical model, the input subitems of the input information are respectively related to the individual defect information by the mathematical model.

2. A defect occurrence prediction method for predicting occurrence of a defect when a built object is manufactured by additive manufacturing, in a desired shape, weld beads formed by melting and solidifying a filler metal fed from a welding head, the method comprising:

a step of respectively generating a first mathematical model and a second mathematical model, the first mathematical model relating input information to intermediate output information, the input information including items of a material of the built object, a welding condition, and a welding track, the intermediate output information including information regarding a temperature history of the built object when additive manufacturing is performed under conditions of the items of the input information, a feature amount of a shape of a molten pool when each weld bead is formed, and a bead height or bead width of each weld bead, and the second mathematical model relating the intermediate output information to output information including defect information of the built object;
a step of creating a database indicating a correspondence between the input information and the output information by using the first mathematical model and the second mathematical model;
a step of inputting the items of the material of the built object, the welding condition and the welding track into the database, and searching the database to obtain the defect information of the built object; and
a step of presenting the obtained defect information of the built object, wherein
each item of the input information includes a plurality of input subitems that are mutually different,
the intermediate output information includes individual intermediate values corresponding to the input subitems,
the output information includes a plurality of pieces of individual defect information corresponding to the individual intermediate values, and
in the step of generating the first mathematical model and the second mathematical model, the input subitems are respectively related to the individual intermediate values by the first mathematical model, and the individual intermediate values are respectively related to the individual defect information by the second mathematical model.

3. The defect occurrence prediction method according to claim 1, wherein information regarding the material in the input information includes information regarding a type of the filler metal.

4. The defect occurrence prediction method according to claim 2, wherein information regarding the material in the input information includes information regarding a type of the filler metal.

5. The defect occurrence prediction method according to claim 1, wherein information regarding the welding condition in the input information includes information regarding at least one of a welding current, a welding voltage, a travel speed, a width of a pitch between adjacent welding tracks, an interpass time of moving from a specific welding track to another welding track among a plurality of the welding tracks, a target position of the welding head, a welding position of the welding head, and a speed of feeding the filler metal when each weld bead is formed, or a combination thereof.

6. The defect occurrence prediction method according to claim 2, wherein information regarding the welding condition in the input information includes information regarding at least one of a welding current, a welding voltage, a travel speed, a width of a pitch between adjacent welding tracks, an interpass time of moving from a specific welding track to another welding track among a plurality of the welding tracks, a target position of the welding head, a welding position of the welding head, and a speed of feeding the filler metal when each weld bead is formed, or a combination thereof.

7. The defect occurrence prediction method according to claim 3, wherein information regarding the welding condition in the input information includes information regarding at least one of a welding current, a welding voltage, a travel speed, a width of a pitch between adjacent welding tracks, an interpass time of moving from a specific welding track to another welding track among a plurality of the welding tracks, a target position of the welding head, a welding position of the welding head, and a speed of feeding the filler metal when each weld bead is formed, or a combination thereof.

8. The defect occurrence prediction method according to claim 4, wherein information regarding the welding condition in the input information includes information regarding at least one of a welding current, a welding voltage, a travel speed, a width of a pitch between adjacent welding tracks, an interpass time of moving from a specific welding track to another welding track among a plurality of the welding tracks, a target position of the welding head, a welding position of the welding head, and a speed of feeding the filler metal when each weld bead is formed, or a combination thereof.

9. The defect occurrence prediction method according to any one of claims 1 to 8, wherein information regarding the welding track in the input information includes information regarding at least one of passes forming each weld bead, the number of passes, an order of forming each weld bead, and a cross-sectional shape of each weld bead.

10. The defect occurrence prediction method according to any one of claims 1 to 8, wherein the welding track includes a partial welding track corresponding to an element shape obtained by cutting out a part of an entire shape of the built object.

11. The defect occurrence prediction method according to claim 9, wherein the welding track includes a partial welding track corresponding to an element shape obtained by cutting out a part of an entire shape of the built object.

12. The defect occurrence prediction method according to any one of claims 1 to 8, wherein the output information includes information regarding at least one of a defect size, a defect shape, a spatter generation amount, and presence or absence of defect occurrence.

13. The defect occurrence prediction method according to claim 9, wherein the output information includes information regarding at least one of a defect size, a defect shape, a spatter generation amount, and presence or absence of defect occurrence.

14. The defect occurrence prediction method according to claim 10, wherein the output information includes information regarding at least one of a defect size, a defect shape, a spatter generation amount, and presence or absence of defect occurrence.

15. The defect occurrence prediction method according to claim 11, wherein the output information includes information regarding at least one of a defect size, a defect shape, a spatter generation amount, and presence or absence of defect occurrence.

16. The defect occurrence prediction method according to any one of claims 1 to 8, wherein the mathematical model is a learned model obtained by machine-learning of a relation between the input information and the output information.

17. The defect occurrence prediction method according to any one of claims 1 to 8, wherein an input range of the input information is restricted to a range limited based on a predetermined condition.

18. A defect occurrence prediction device for predicting occurrence of a defect when a built object is manufactured by depositing, in a desired shape, weld beads formed by melting and solidifying a filler metal fed from a welding head, the device comprising:

a mathematical model generation unit configured to generate a mathematical model that relates input information to output information, the input information including items of a material of the built object, a welding condition, and a welding track, the output information including defect information of the built object when additive manufacturing is performed under conditions of the items of the input information;
a database creation unit configured to create a database indicating a correspondence between the input information and the output information by using the mathematical model;
a search unit configured to search the database based on the items of the material of the built object, the welding condition, and the welding track input into the database to obtain the defect information of the built object; and
an output unit configured to present the obtained defect information of the built object, wherein
each item of the input information includes a plurality of input subitems that are mutually different,

the output information includes a plurality of pieces of individual defect information corresponding to the input subitems, and

in the step of generating the mathematical model, the input subitems of the input information are respectively related to the individual defect information by the mathematical model.

19. A defect occurrence prediction device for predicting occurrence of a defect when a built object is manufactured by depositing, in a desired shape, weld beads formed by melting and solidifying a filler metal fed from a welding head, the device comprising:

a mathematical model generation unit configured to respectively generate a first mathematical model and a second mathematical model, the first mathematical model relating input information to intermediate output information, the input information including items of a material of the built object, a welding condition, and a welding track, the intermediate output information including information regarding a temperature history of the built object when additive manufacturing is performed under conditions of the items of the input information, a feature amount of a shape of a molten pool when each weld bead is formed, and a bead height or bead width of each weld bead, the second mathematical model relating the intermediate output information to output information including defect information of the built object;

a database creation unit configured to create a database indicating a correspondence between the input information and the output information by using the first mathematical model and the second mathematical model;

a search unit configured to search the database based on the items of the material of the built object, the welding condition, and the welding track input into the database to obtain the defect information of the built object; and

an output unit configured to present the obtained defect information of the built object, wherein

each item of the input information includes a plurality of input subitems that are mutually different,

the intermediate output information includes individual intermediate values corresponding to the input subitems,

the output information includes a plurality of pieces of individual defect information corresponding to the individual intermediate values, and

in the step of generating the first mathematical model and the second mathematical model, the input subitems are respectively related to the individual intermediate values by the first mathematical model, and the individual intermediate values are respectively related to the individual defect information by the second mathematical model.

FIG. 1

EP 4 169 659 A1

## FIG. 2

EP 4 169 659 A1

ROBOT CONTROLLER  21

OPERATION PANEL  37

STORAGE UNIT  35

BUILDING PROGRAM

WELDING ROBOT  17

WELDING POWER SOURCE  25

INPUT AND OUTPUT INTERFACE  33

CONTROL DEVICE  13

FIG. 3

**BUILDING CONTROL DEVICE** 13

CPU 41

STORAGE UNIT 43

BASIC INFORMATION TABLE 51

MATHEMATICAL MODEL GENERATION UNIT 53

DATABASE CREATION UNIT 55

BUILDING PLAN UNIT 57

SEARCH UNIT 59

INPUT AND OUTPUT INTERFACE 45

INPUT UNIT 47

OUTPUT UNIT 49

SHAPE SENSOR 32

TEMPERATURE SENSOR 30

WIRE FEED SENSOR 31

FILLER METAL FEEDING UNIT 23

WELDING POWER SOURCE 25

ROBOT CONTROL DEVICE 21

DATA OF MATERIAL SHAPE AND WELDING CONDITION (TEST RESULT)

# FIG. 4

DATABASE 61

DATABASE CREATION UNIT

MATERIAL SHAPE WELDING CONDITION → BUILDING PLAN → PREDICTION AND DETERMINATION

PREDICTION AND DETERMINATION —OK→ BUILDING PROGRAM CREATION → ADDITIVE MANUFACTURING

PREDICTION AND DETERMINATION —NG→ CONDITION CHANGE → BUILDING PLAN

*FIG. 5*

DATABASE CONSTRUCTION

# FIG. 6

```
                    ┌─────────────┐
                    │    START    │
                    └─────────────┘
                           │
                           ▼
        ┌──────────────────────────────────┐
        │      DETERMINE BUILT OBJECT       │──S11
        └──────────────────────────────────┘
                           │
                           ▼
        ┌──────────────────────────────────┐
        │ BUILDING PLAN  ┌─ • SLICE DATA    │
        │                │  • BEAD SHAPE    │──S12
        │                └─ • WELDING CONDITION │
        └──────────────────────────────────┘
              │                      │
        S14   ▼                      ▼  S13
  ┌────────────────────┐  ┌──────────────────────────────────┐
  │ CREATE BUILDING    │  │   PREDICT DEFECT IN BUILT OBJECT  │
  │ PROGRAM            │  │     BASED ON INITIAL DATABASE     │
  └────────────────────┘  │                                   │
        │  S15             │ ┌─ • PRESENCE OR ABSENCE OF DEFECT │
        ▼                  │ │  • DEFECT LOCATION             │
  ┌────────────────────┐  │ │  • DEFECT SIZE                 │
  │  PERFORM BUILDING  │  │ └─ • PRESENCE OR ABSENCE OF SPUTTER, ETC. │
  └────────────────────┘  └──────────────────────────────────┘
        │  S16                          │
        ▼                               │
  ┌────────────────────┐                │
  │  TEST BUILT OBJECT │                │
  └────────────────────┘                │
        │                               │
  TEST RESULT (TEACHING DATA)           │
        │                               │
        ▼                               ▼
  ┌──────────────────────────────────────────┐
  │  COMPARE PREDICTION RESULT AND TEST RESULT│──S17
  └──────────────────────────────────────────┘
                     │
                     ▼
         ╱─────────────────────────╲
   NO   ╱      IS DIFFERENCE         ╲
  ◄────╱ BETWEEN PREDICTION RESULT AND ╲
        ╲      TEST RESULT LARGE?     ╱
         ╲───────────────────────────╱
                     │ YES
                     ▼
        ┌──────────────────────────────────┐
        │    CORRECT MATHEMATICAL MODEL     │──S18
        │        (MACHINE LEARNING)         │
        └──────────────────────────────────┘
                     │
                     ▼
        ┌──────────────────────────────────┐
        │ CONSTRUCT DATABASE CORRESPONDING  │──S19
        │      TO MATHEMATICAL MODEL        │
        └──────────────────────────────────┘
                     │
                     ▼
              ┌─────────────┐
              │     END     │
              └─────────────┘
```

# FIG. 7

```
                    ┌──────────────────────┐
                    │        START         │
                    └──────────┬───────────┘
                               │
                               ▼
┌──────────────────────────────────────────────────────┐
│ PREPARE LEARNING DATA BASED ON BASIC INFORMATION TABLE │──S21
└──────────────────────────┬─────────────────────────────┘
                           │
                           ▼
┌──────────────────────────────────────────────────────┐
│  GENERATE MATHEMATICAL MODEL BASED ON LEARNING DATA    │──S22
│               (MACHINE LEARNING)                       │
└──────────────────────────┬─────────────────────────────┘
                           │
                           ▼
┌──────────────────────────────────────────────────────┐
│ CREATE INITIAL DATABASE BASED ON MATHEMATICAL MODEL    │──S23
└──────────────────────────┬─────────────────────────────┘
                           │
                           ▼
                    ┌──────────────────────┐
                    │         END          │
                    └──────────────────────┘
```

# FIG. 8

(A)

| INPUT INFORMATION | | OUTPUT INFORMATION |
|---|---|---|
| FILLER METAL A | MATHEMATICAL MODEL A | DEFECT INFORMATION A |
| FILLER METAL B | MATHEMATICAL MODEL B | DEFECT INFORMATION B |
| FILLER METAL C | MATHEMATICAL MODEL C | DEFECT INFORMATION C |
| FILLER METAL D | MATHEMATICAL MODEL D | DEFECT INFORMATION D |
| FILLER METAL E | MATHEMATICAL MODEL E | DEFECT INFORMATION E |
| FILLER METAL F | MATHEMATICAL MODEL F | DEFECT INFORMATION F |

(B)

60

DATABASE

| INPUT INFORMATION | | OUTPUT INFORMATION |
|---|---|---|
| FILLER METAL A | ASSOCIATION | DEFECT INFORMATION A |
| FILLER METAL B | | DEFECT INFORMATION B |
| FILLER METAL C | | DEFECT INFORMATION C |
| FILLER METAL D | | DEFECT INFORMATION D |
| FILLER METAL E | | DEFECT INFORMATION E |
| FILLER METAL F | | DEFECT INFORMATION F |

# FIG. 9

INPUT INFORMATION

| MATERIAL OF BUILT OBJECT | | WELDING CONDITION | | PARTIAL WELDING TRACK |
|---|---|---|---|---|

× ×

MATHEMATICAL MODEL

OUTPUT INFORMATION

DEFECT INFORMATION OF BUILT OBJECT

# FIG. 10

DIVIDE

65B

65A

65C

REFERENCE
WELDING
TRACK

| WELDING TRACK B | WELDING TRACK A | WELDING TRACK C |
|---|---|---|

# FIG. 11

```
                    ┌──────────────┐
                    │    START     │
                    └──────┬───────┘
                           │
                           ▼
        ┌─────────────────────────────────────────┐
        │           INPUT SHAPE DATA              │──S31
        └─────────────────┬───────────────────────┘
                          │
                          ▼
        ┌─────────────────────────────────────────┐
        │       DECOMPOSE INTO ELEMENT SHAPES     │──S32
        └─────────────────┬───────────────────────┘
                          │
                          ▼
        ┌─────────────────────────────────────────┐
        │ EXTRACT REFERENCE WELDING TRACK AND     │──S33
        │ WELDING CONDITION OF EACH ELEMENT       │
        │ SHAPE FROM DATABASE                     │
        └─────────────────┬───────────────────────┘
                          │
                          ▼
        ┌─────────────────────────────────────────┐
        │ DETERMINE WELDING TRACK BASED ON        │──S34
        │ REFERENCE WELDING TRACK                 │
        └─────────────────┬───────────────────────┘
                          │
                          ▼
        ┌─────────────────────────────────────────┐
        │ CREAT BUILDING PLAN FOR ENTIRE BUILT    │──S35
        │ OBJECT BASED ON WELDING TRACK AND       │
        │ WELDING CONDITION                       │
        └─────────────────┬───────────────────────┘
                          │
                          ▼
                    ┌──────────────┐
                    │     END      │
                    └──────────────┘
```

# FIG. 12

INTERMEDIATE OUTPUT
INFORMATION

INPUT INFORMATION

| MATERIAL OF BUILT OBJECT | | WELDING CONDITION | | PARTIAL WELDING TRACK |
|---|---|---|---|---|
| | × | | × | |

FIRST
MATHE-
MATICAL
MODEL

TEMPERATURE
HISTORY OF BUILT
OBJECT

FEATURE AMOUNTS
SUCH AS MOLTEN
POOL SHAPE AND
ARC SHAPE

BEAD HEIGHT
BEAD WIDTH

PRESENCE OR
ABSENCE OF
SPUTTER

SECOND
MATHE-
MATICAL
MODEL

OUTPUT INFORMATION

DEFECT INFORMATION
OF BUILT OBJECT

EP 4 169 659 A1

# FIG. 13

## FIG. 14

(A)

(B)

## FIG. 15

## FIG. 16

# FIG. 17

(A)

BD1

(B)

BD1-2          BD1-1

## FIG. 18

(A)

BD2

(B)

BD2-4

BD2-3

BD2-2

BD2-1

FIG. 19

DATABASE DB1

MATHEMATICAL MODEL I

INPUT INFORMATION

OUTPUT INFORMATION

INTERMEDIATE OUTPUT INFORMATION

MATHEMATICAL MODEL IIa

MATHEMATICAL MODEL IIb

DATABASE DB2

## INTERNATIONAL SEARCH REPORT

| International application No. |
|---|
| PCT/JP2021/025680 |

### A. CLASSIFICATION OF SUBJECT MATTER

B23K 31/00(2006.01)i; B23K 9/032(2006.01)i; B23K 9/04(2006.01)i; B33Y 10/00(2015.01)i; B33Y 30/00(2015.01)i; B33Y 50/00(2015.01)i
FI: B23K31/00 Z; B23K9/04 G; B23K9/04 Z; B23K9/032 Z; B33Y10/00; B33Y30/00; B33Y50/00

According to International Patent Classification (IPC) or to both national classification and IPC

### B. FIELDS SEARCHED

Minimum documentation searched (classification system followed by classification symbols)
B23K31/00; B23K9/032; B23K9/04; B33Y10/00; B33Y30/00; B33Y50/00

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2020/129618 A1 (PANASONIC IP MANAGEMENT CO., LTD.) 25 June 2020 (2020-06-25) paragraphs [0057]–[0062] | 1–19 |
| A | JP 2015-3333 A (DAIHEN CORPORATION) 08 January 2015 (2015-01-08) paragraphs [0079]–[0101] | 1–19 |

☐ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 06 September 2021 (06.09.2021) | 21 September 2021 (21.09.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

Information on patent family members

International application No.

PCT/JP2021/025680

| Patent Documents referred in the Report | Publication Date | Patent Family | Publication Date |
|---|---|---|---|
| WO 2020/129618 A1 | 25 Jun. 2020 | (Family: none) | |
| JP 2015-3333 A | 08 Jan. 2015 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019005809 A
- JP 2019162666 A
- JP 2020123859 A